# EUROPEAN PATENT APPLICATION

(11) **EP 1 875 816 A2**
(43) Date of publication of application: **09.01.2008**
(21) Application number: 07020057.1
(22) Date of filing: 12.07.2004
(51) Int. Cl.: A23L 1/29, A23L 1/30, C12C 5/02, C12C 5/00, C12G 1/00, C12G 3/04, A61K 9/00

(54) **Beverages with specialized supplements**

(30) Priority: 10.07.2003 US 616674; 14.11.2003 US 520466 P; 13.01.2004 US 536286 P
(62) Divisional of application: 04778170.3
(71) Applicant: Forest, Carl A., Denver, CO 80264 (US); McCleary, Edward Larry, Incline Village, NV 89451 (US); McCleary, Christine, Incline Village, NV 89451 (US)
(72) Inventor: Forest, Carl A., Denver, CO 80264 (US); McCleary, Edward Larry, Incline Village, NV 89451 (US); McCleary, Christine, Incline Village, NV 89451 (US)
(74) Representative: Tönhardt, Marion

(57) **Abstract**

An alcoholic beverage designed to enhance liver function or prevent liver damage or disease in a human being or to enhance weight loss in a human being, said beverage comprising a beer, wine, or liquor base; said alcoholic beverage is characterized by a composition for enhancing liver function or preventing liver damage or disease in a human being or for enhancing weight loss in a human being, said composition comprising an ingredient selected from the group consisting of one or more gluconeogenic substrates, aspartate, aspartic acid, lipoic acid, alpha-lipoic acid, huperzine, medium chain triglycerides, pyruvate, L-aspartic acid, carnitine, acetyl-L-carnitine, L-carnitine, chromium, conjugated linoleix acid, chromium polynicotinate, garcinia cambogia, biotin, hydroxycitric acid (HCA), pyruvate, serine, glycine, phosphatidyl choline, lactate, glycerol, a gluconeogenic amino acid or an alphaketo analogue thereof, conjugated linoleic acid (CLA), eicosapentanoic acid (EPA), coenzyme Q10, magnesium, pyridoxine, gymnemic acid, gymnema sylvestre, mahuang or a derivative thereof; and guarana seed or a derivative thereof; said ingredient present in an amount in excess of the amount of said ingredient naturally present in said beer, wine, or liquor base.

## Description

### BACKGROUND OF THE INVENTION

### 1. Field of the Invention

The invention relates to foods, condiments, spices, salad dressings, beverages, particularly alcoholic beverages, with added metabolic supplement ingredients, and more particularly foods, condiments, spices, salad dressings, and beverages with supplements that address specific health disorders in human beings.

### 2. Statement of the Problem

There is currently an epidemic of lifestyle related health disorders. These include, but are not limited to, high blood pressure, diabetes, dyslipidemia, hyperlipidemia, hypercholesterolemia, insulin resistance, inflammation, vascular disease, heart disease, liver disease, stroke, overweight, obesity, neuronal and/or cognitive dysfunction, dementia, attention and attention/hyperactivity disorders, mood disorders, muscular damage, muscular deterioration or soreness, athletic compromise, sarcopenia, glucose intolerance and other disorders of glucose metabolism, premature aging, skin deterioration and/or damage either associated with, or not associated with, sun exposure, loss of muscle tone, frailty, and bone loss. It is becoming increasingly clear that these disorders are related to a mismatch between human metabolic needs as determined by the evolutionary process, and current dietary and lifestyle habits. It has been postulated that the relatively limited diets of an agricultural society do not meet the needs of a human genome that developed over hundreds of thousands of years with the varied diet of a hunter-gatherer. This mismatch has increased in recent years as the agricultural society has evolved into a fast-food society..

Fortified foods have been known for many years. In the food industry and in this disclosure "fortified" in relation to foods refers to the addition to foods of vitamins and minerals known to be used in the human metabolic process. While having some successes, such as the great reduction of goiter by the addition of iodine to salt and the decrease in malnutrition in young people by the addition of vitamin D to milk, in general, fortification has done little to slow the increase in human metabolic disorders discussed above. This is because fortification is one-dimensional while the disorders referred to above are multi-dimensional. For the same reason that piling up in one place all the bricks, mortar, steel, wood, and other materials necessary to build a skyscraper does not create a skyscraper, giving the body all the basic nutrients known to be used by the body does not result in healthy bodies. For example, the fact that a nutrient is placed into the intestinal tract does not assure that it gets into the cells because many nutrients cannot be stored or even assimilated by the body except through complex processes having other requirements. As another example, the availability of vitamins and minerals does not address obesity, and obesity is an important factor in many of the ailments mentioned above.

Out of the perception of a mismatch between our dietary and lifestyle habits and the recognition that the human metabolism has more complex needs than can be met by fortification of foods, a large nutritional supplement industry has evolved. This too has had some great successes. For example, it has been demonstrated that certain supplements are effective in counteracting some chronic disease conditions. For example, many weight loss supplements, cholesterol blockers, stroke preventive supplements, and brain and nervous system enhancement supplements all have been demonstrated to be effective. However, for dietary supplements to succeed, a human being must keep a supply of the supplements available and remember to take them regularly. Though in theory this may seem easy to do, in practice it is not. Most homes have cupboards where food supplements sit unused because they are forgotten in the everyday pace of life. Meals are often had away from home or on business, so if a person is to use a supplement regularly, he or she must carry it with them at all times, which is inconvenient. If they do carry it with them, it may be sitting in their car when they find themselves in a restaurant. Even if the supplement is on the person, many would not use them in a social or business meal situation. Further, some of the same issues that prevent simple fortification from solving chronic health problems, such as assimilation and storage issues, also apply to supplements. That is, many supplements must be taken with foods to gain their full benefit, but for the reasons given above, this is not always practical.

As a result, the chronic health problems noted above and others that can be addressed successfully with supplements continue for many people despite the new understanding and the availability of supplements. The problems are ongoing and require ongoing treatment. Some people, for example, struggle against high blood pressure, heart, and/or overweight problems for much of their lives. Thus, it would be highly desirable to have dietary supplements that are known to be essential to the human metabolism available in a manner that made them transparently easy to use in the course of everyday life, and at a time and quantity that was more compatible with human metabolism.

### SUMMARY OF THE INVENTION

The invention provides a solution to the above problem by systematically incorporating nutritional supplements with metabolic actions into foods, condiments and spices, salad dressings and beverages, preferably into certain foods that have become an everyday part of the modern diet. In the more preferred embodiments, the supplements are incorporated into foods that are normally eaten by persons having the chronic problems that the supplements address. In the most preferred embodiment, details of the metabolic process are used to select combinations of a food, a condiment, a spice, a beverage, or a salad dressing with supplements that will most likely address particular chronic health problems mentioned above as well as other chronic health issues.

The invention arose out of recognition by the inventors of the difficulty of having metabolic supplements available in a fast-paced life style plus recognition that certain foods lend themselves to the face-paced life style, have become preferred parts of the modern diet. For example, every restaurant today has a variety of salads on the menu, so much so that salads are now viewed not as a pre-course but as a main course. Salad bars have become a staple in restaurants. Fast food restaurants such as McDonalds^{™} and Wendys^{™} offer excellent salads as part of their menus. Further, people with chronic obesity problems often turn to salads as at least part of the solution. As other examples, condiments such as relishes, catsup and mustard are routinely incorporated into foods, such as hamburgers, and cheese and tomato paste are core ingredients in pizza, both of which are often consumed by people who tend not to eat balanced diets and/or are overweight. Thus, if a salad dressing, condiment, a cheese or tomato paste could be widely provided that included weight loss metabolic supplements, people would find it much easier to regularly ingest these supplements and would benefit greatly from them. As another example, meats have become a preferred part of the diet for those on certain specialized weight loss diets, such as the Atkins^{™} diet and the South Beach^{™} diet, and at the same time may have a negative effect on cholesterol. Thus, meats as well as steak sauces and other condiments used on meats become natural conduits for the delivery of weight loss supplements and cholesterol blockers. Similarly, dairy products with a high fat content, such as ice cream and butter, become natural conduits for weight loss supplements and cholesterol blockers. Yogurt, tofu, bagels, and trail mix are other foods that have become popular parts of the modern diet among health-conscious people, and thus can serve as vehicles for delivering specialized supplements.

In the preferred embodiment of the invention the supplements are not just any fortification thought to be essential or useful to the human metabolism, but comprise a combination of ingredients that have been clinically demonstrated, individually or together, to address a specific disorder of the human genome.

The term "food" is used herein in its most common sense. The Merriam-Webster on-line dictionary at http://www. m-w.com gives as the principal definition of "food" as "material consisting essentially of protein, carbohydrate, and fat used in the body of an organism to sustain growth, repair, and vital processes and to furnish energy. This is what is meant by food herein. The same dictionary also gives a secondary definition of "food" as: such food (referring to the definition just given) together with supplementary substances. This is not the definition of food we use herein, because "food" is distinct from supplementary substances herein. "Food" includes appetizers. The word "food" herein is generally limited to foods as defined above in solid form, to distinguish foods from beverages, but "foods" also include some liquids that are commonly recognized as food, such as vegetable oils. In this disclosure, "condiment" means something used to enhance the flavor of food; *especially :* a pungent seasoning. Condiments do not include salad dressing, since salad dressings are considered to be a separate category herein. In this disclosure "beverage" means a liquid for drinking, that is, a liquid that is typically drunk for the purpose of refreshment, and specifically does not include water, medicines, or liquid supplementary substances.

In one aspect, the invention comprises a weight loss supplement in combination with a food, a condiment, a spice, a beverage, or a salad dressing. The term "weight loss metabolic supplement" does not include substitutes for fat, oil, or sugar, but is limited to substances that directly affect body chemistry to bring about weight loss. Weight loss supplements include any and all substances generally known as weight loss supplements, including, but not limited to, fat blockers, carbohydrate blockers, appetite suppressants, metabolic agents, thermogenic agents, weight loss stimulants, nutrient partitioning modulators, and any other substance which is ingested not directly for its food value, but to interact with the body chemistry to prevent other substances with food value from being eaten, to cause other substances with food value to be eliminated without being absorbed, to cause the body to burn more fat or carbohydrate, or to cause the body to metabolize food differently.

The invention provides a weight loss food comprising: a food base; and a weight loss supplement, which weight loss supplement is present in an amount in excess of the amount of said supplement present naturally in foods. In other aspects, a beverage base, a condiment or spice base, or a salad dressing base can be used instead of the food base.

In the preferred embodiment, the weight loss supplement includes ingredients for modulating nutrient partitioning in the body so as to increase oxidation of fat. Preferably, the weight loss supplement comprises one or more of the following ingredients: mahuang or a derivative thereof; guarana seed or a derivative thereof; L-aspartic or aspartic acid; carnitine or L-carnitine; Garcinia cambogia or a derivative thereof; hydroxycitric acid; eicosapentanoic acid; one or more gluconeogenic substrates selected from the group consisting of: aspartate, lactate, glycerol; and a gluconeogenic amino acid or an alphaketo analogue thereof; each of the ingredients being present in an effective amount. Preferably, said weight loss supplement further comprises an effective amount of at least one nutritional supplement. Preferably, the nutritional supplement is selected from the group consisting of: chromium, biotin, conjugated linoleic acid, coenzyme Q10, eicosapentaenoic acid, pyridoxine, alpha-lipoic acid, magnesium, and Gymnema sylvestre. In one preferred embodiment of the invention, the weight loss supplement portion thereof comprises hydroxycitric acid, carnitine, biotin and a gluconeogenic substrate, which preferably is selected from aspartate, lactate, glycerol, and a gluconeogenic amino acid or an alphaketo analogue thereof. In another preferred embodiment, the weight loss supplement portion thereof includes garcinia camobogia or a derivative thereof, aspartic acid, L-carnitine, biotin, and chromium.

In another aspect, the invention also provides the combination of a brain and nerve function enhancement supplement with a food, a beverage, a condiment or spice, or a salad dressing. As a related aspect, the present invention provides the combination of a composition for treating impaired neurological function in the body of a human with a food, a beverage, a condiment, a spice or a salad dressing. A first aspect of the present invention is directed to the combination of a food, a beverage, a condiment, a spice or a salad dressing with a nutritional supplement composition for treating impaired or deteriorating neurological function in the body of a human having impaired or deteriorating neurological function, or maintaining or enhancing neurological function, wherein the composition contains an effective amount of one or more of the following agents: (A) an agent which promotes synthesis of adenosine triphosphate (ATP) and/or creatine phosphate in the body; (B) an antioxidant for scavenging free radicals in at least one pathway in the body; (C) an agent for normalizing or maintaining membrane function and structure in the body; (D) an agent for normalizing or maintaining normal neurotransmitter function in the body; (E) an agent for down-regulating cortisol action; and (F) an agent for suppressing activation of apoptotic pathways in the body; (G) an agent for suppressing inflammation in the body; (H) an agent for normalizing or maintaining vascular wall function and structure in the body; (I) an agent for normalizing or maintaining function of nerve growth factors and/or neurotropic factors in the body; (J) an agent for suppressing toxic metal ionic effects; (K) an agent for normalizing or maintaining methyl metabolism in the body; an (L) agent for normalizing or maintaining metabolism of insulin and glucose in the body; and (M) an agent for up-regulating activity of heat shock proteins in the body. The invention also includes any combination or the above M agents in a food, beverage, condiment, spice or salad dressing.

In a further aspect, the invention comprises supplements designed to assist liver function and/or prevent liver damage and/or disease and address other maladies associated with alcohol consumption in combination with a food, a beverage, a condiment, a spice or a salad dressing. These liver enhancement supplements include weight loss supplements, lipotropics, glycemic index modulators, and essential nutrients. In one aspect of the invention, these supplements, alone or in combination, are preferably combined with an alcoholic beverage, such as beer, or a food customarily consumed with an alcoholic beverage, such as beer nuts or pretzels.

In yet another aspect, the invention provides a food, a beverage, a condiment, a spice or a salad dressing in combination with one or more added cholesterol blocker supplements and cholesterol level improvement supplements.

In a further aspect, the invention provides a food, a beverage, a condiment, a spice or a salad dressing in combination with a cardiac enhancement supplement.

In a still another aspect, the invention provides a food, a beverage, a condiment or spice, or a salad dressing in combination with a vascular health enhancement supplement.

In a further aspect, the invention provides a food, a beverage, a condiment or spice, or a salad dressing in combination with a bone health enhancement supplement.

In yet a further aspect, the invention provides a food, a beverage, a condiment or spice, or a salad dressing in combination with a fetus developmental (prenatal) and/or a postnatal breast milk enhancement supplement.

In a further aspect, the invention provides a food, a beverage, a condiment or spice, or a salad dressing in combination with a prostrate health enhancement supplement.

In a further aspect, the invention provides a food, a beverage, a condiment or spice, or a salad dressing in combination with a cholesterol level enhancement supplement.

In a further aspect, the invention provides a food, a beverage, a condiment or spice or a salad dressing in combination with an anti-aging supplement. The anti-aging methods and compositions limit the accumulation of high-energy electrons potentially available to the electron transport chain, and utilize several synergistic mechanisms that together tend to reduce generation of reactive oxygen species (ROS), reduce the proton-motive force (PMF), improve cellular redox status, reduce both *de novo* as well as secondary generation of free radicals, modulate mitochondrial proton conductance (MPC), and/or modulate intracellular nucleotide levels, ratios, and turnover with subsequent beneficial effects upon various cell-signaling and other metabolic pathways. These cell-signaling and other metabolic pathways include those for protein kinase C (PKC), diacylglycerol (DAG), the hormone insulin, and those pathways mediating lipid synthesis. The anti-aging supplements further include the ability to modulate transitional-metal metabolism, especially copper- and iron-mediated processes related to free-radical biology, and the ability to beneficially influence transcription factors, including AP-1 and NFKB, which play key roles in inflammation and inflammatory processes.

In a further aspect, the invention provides a food, a beverage, a condiment or spice or a salad dressing in combination with a joint health enhancement supplement.

In a further aspect, the invention provides a food, a beverage, a condiment or spice, or a salad dressing in combination with an eye health enhancement supplement.

In a further aspect, the invention provides a food, a beverage, a condiment or spice, or a salad dressing in combination with an enhanced physical performance supplement.

One particular embodiment of the invention includes the combination of any of the above supplements with an alcoholic beverage, such as a beer, a wine, liquor, an aperitif, a cordial, or any other alcohol containing beverage. Here, "alcoholic beverage" does not include a medicine or a drink that is primarily a food supplement.

The invention provides a food, beverage, condiment, spice or salad dressing product designed to enhance the human metabolism, the product comprising: a food, beverage, condiment, spice or salad dressing base; and a human metabolic supplement comprising an ingredient selected from the group consisting of policosanol, aspartate, lipoic acid, huperzine, trimethylglycine, and medium chain triglycerides, the supplement present in an amount in excess of the amount of the supplement naturally present in the food, beverage, condiment, spice or salad dressing base. Preferably, the base is a beverage base and the beverage is an alcoholic beverage. Preferably, the base is a food base and the food is selected from the group consisting of: vegetables and vegetable food products such as baked beans, tomato-based products like tomato paste, stewed tomatoes, spaghetti sauce, pizza sauce, vegetable oils, fruit and fruit food products such as jellies, jams and syrups, cereals, trail mix, cookies, pasta, flours including wheat, soy, oat, and potato flour, whey, chocolate, candy, tofu, bagels, baked goods such as bread, cakes, pizza dough and mixes for these, pancakes and waffles and mixes for these, soups, trail mix, nutritional bars, peanut butter, potato chips, corn chips, crackers, meats, and meat food products, such as lunch meats, hot dogs and sausage, milk food products, such as ice cream, yogurt, cheese and butter. Preferably, the base is a beverage base and the beverage is selected from the group consisting of: soft drinks, tea, coffee, milk, fruit juices, and sports drinks. Preferably, the base is a condiment or spice base and the condiment or spice is selected from the group consisting of: steak sauce, mustard, catsup, soy sauce, chili sauce, chip dips, salsa, pickles, horseradish, curry, chili powder, salt, pepper, vinegar, cinnamon, garlic and garlic powder, garlic oil, onion and onion powder and onion oil.

The invention also provides an alcoholic beverage designed to enhance human metabolism, the alcoholic beverage comprising: an alcoholic beverage base; and a human metabolic supplement comprising a combination of ingredients designed to either: enhance one or more of the following human metabolic functions: weight loss; brain function; nerve function; liver function; cardiac function; vascular function; cholesterol level, bone health; prostrate health; fetus development; postnatal breast milk production, eye health; and physical performance; or to block the absorption of a substance selected from the group consisting of cholesterol, carbohydrate; or fat; wherein the combination of ingredients is present in an amount in excess of the amount of the supplement naturally present in the alcoholic beverage base. Preferably, the alcoholic beverage base comprises an alcoholic beverage selected from the group consisting of beer, wine, liquors, liqueurs, flavored alcohols, brandies, cocktails, aperitifs, and cordials.

In a further aspect, the invention provides a condiment or spice product designed to enhance weight loss, the product comprising: a condiment, or spice base; a weight loss supplement comprising a combination of ingredients demonstrated, individually or together, to enhance weight loss, the supplement present in an amount in excess of the amount of the supplement naturally present in the food condiment or spice base. Preferably, the weight loss supplement comprises a supplement selected from the group comprising: fat blockers, carbohydrate blockers, appetite suppressants, metabolic agents, thermogenic agents, weight loss stimulants, nutrient partitioning modulators, and any other substance which is ingested not directly for its food value, but to interact with the body chemistry to prevent other substances with food value from being eaten, to cause other substances with food value to be eliminated without being absorbed, to cause the body to burn more fat or carbohydrate, or to cause the body to metabolize food differently.

In yet another aspect, the invention provides an alcoholic beverage designed to enhance human health, the alcoholic beverage comprising: an alcoholic beverage base; and a health additive selected from the group consisting of a vitamins and minerals, the vitamin or mineral present in an amount in excess of the amount of the vitamin or mineral naturally present in the alcoholic beverage base. Preferably, the alcoholic beverage base comprises an alcoholic beverage selected from the group consisting of beer, wine, liquors, liqueurs, flavored alcohols, brandies, cocktails, aperitifs, and cordials.

In still another aspect, the invention provides a food, beverage, condiment, spice or salad dressing product designed to enhance human brain or nerve function, the product comprising: a food, beverage, condiment, spice or salad dressing product base; and a human metabolic supplement comprising a combination of ingredients designed to enhance human cognitive, brain function or human nerve function, the metabolic supplement present in excess of the amount of the supplement naturally present in the base; and wherein the human metabolic supplement comprises effective amounts of: (A) at least one agent which promotes synthesis of ATP and/or creatine phosphate in the body; (B) at least one antioxidant for scavenging free radicals in at least one pathway in the body; (C) at least one agent for normalizing or maintaining membrane function and structure in the body; (D) at least one agent for normalizing or maintaining normal neurotransmitter function in the body; (E) at least one agent for down-regulating cortisol action; and (F) at least one agent for suppressing activation of apoptotic pathways in the body. Preferably, the base is a beverage base and the beverage is an alcoholic beverage. Preferably, the base is a food base and the food is selected from the group consisting of: vegetables and vegetable food products such as baked beans, tomato-based products like tomato paste, stewed tomatoes, spaghetti sauce, pizza sauce, vegetable oils, fruit and fruit food products such as jellies, jams and syrups, cereals, trail mix, cookies, pasta, flours including wheat, soy, oat, and potato flour, whey, chocolate, candy, tofu, bagels, baked goods such as bread, cakes, pizza dough and mixes for these, pancakes and waffles and mixes for these, soups, trail mix, nutritional bars, peanut butter, potato chips, corn chips, crackers, meats, and meat food products, such as lunch meats, hot dogs and sausage, milk food products, such as ice cream, yogurt, cheese and butter. Preferably, wherein the base is a beverage base and the beverage is selected from the group consisting of: soft drinks, tea, coffee, milk, fruit juices, and sports drinks. Preferably, the beverage comprises a sports drink. Preferably, the base is a condiment or spice base and the condiment or spice is selected from the group consisting of: steak sauce, mustard, catsup, soy sauce, chili sauce, chip dips, salsa, pickles, horseradish, curry, chili powder, salt, pepper, vinegar, cinnamon, garlic and garlic powder, garlic oil, onion and onion powder and onion oil. Preferably, the food product further comprises one or more of the following ingredients: (G) an agent for suppressing inflammation in the body; (H) an agent for normalizing or maintaining vascular wall function and structure in the body; (I) sn agent for normalizing or maintaining function of nerve growth factors and/or neurotropic factors in the body; (J) an agent for suppressing toxic metal ionic effects; (K) an agent for normalizing or maintaining methyl metabolism in the body; an (L) agent for normalizing or maintaining metabolism of insulin and glucose in the body; and (M) an agent for up-regulating activity of heat shock proteins in the body.

In still a further aspect, the invention provides a condiment, spice or salad dressing product designed to enhance the human metabolism, the product comprising: a condiment, spice or salad dressing base; and a metabolic supplement comprising a combination of ingredients designed to enhance one or more of the following human metabolic functions: brain function; nerve function; liver function; cholesterol level, cardiac function; vascular function; bone health; joint health, prostrate health; fetus development; postnatal breast milk production, eye health; and physical performance; wherein the combination of ingredients is present in an amount in excess of the amount of the supplement naturally present in the food or beverage base. Preferably, the product is a salad dressing product. Preferably, the product is a condiment or spice product.

Numerous other features, objects and advantages of the invention will become apparent from the following description when read in conjunction with the accompanying drawing.

### BRIEF DESCRIPTION OF THE DRAWING

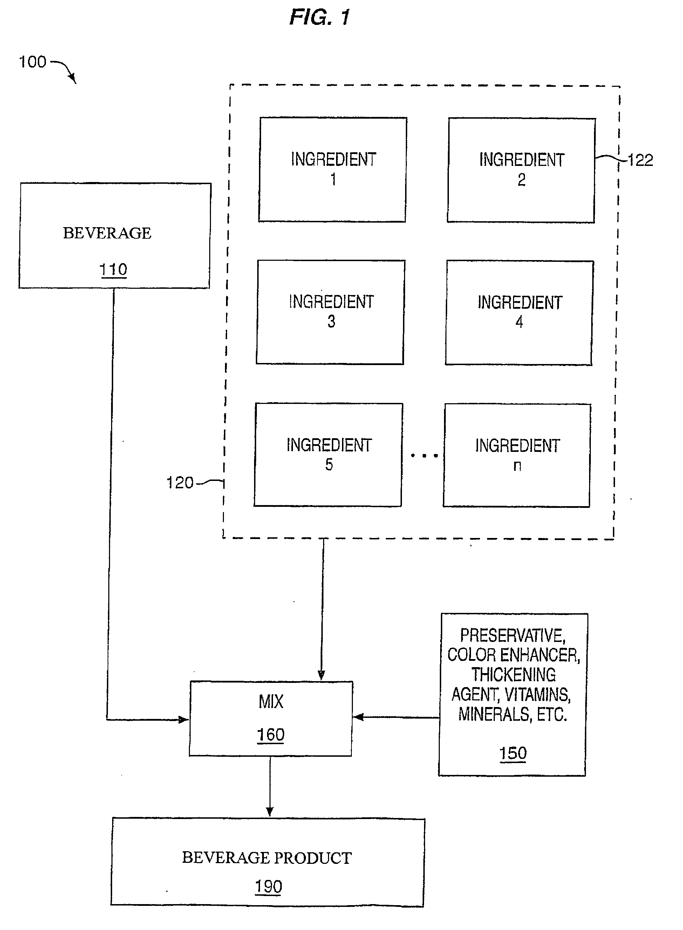

FIG. 1 is a block diagram illustrating the food, beverage, condiment, spice or salad dressing according to the invention and the method of making it.

### DETAILED DESCRIPTION OF THE PREFERRED EMBODIMENT

### 1. Overview

FIG. 1 illustrates the food, beverage, condiment or spice, or salad dressing product 190 according to the invention and the method of making it. The food, beverage, condiment or spice, or salad dressing with specialized supplement product includes a food, beverage, condiment or spice, or salad dressing base 110 and a specialized supplement 120. Specialized supplement 120 may have one or many supplement ingredients 122. Optionally, it may also include other non-supplement ingredients 150, such as preservatives, color enhancers, thickening agents, vitamins, minerals, or other such additive ingredients. Food, beverage, condiment or spice, or salad dressing 110, specialized supplement 120, and any other desirable ingredient 150 are mixed at 160 to create food, beverage, condiment or spice, or salad dressing product 190.

In the following, we will disclose a number of different food, beverage, condiment or spice, and salad dressing bases and a number of supplements that have been found to be useful to make the food, beverage, condiment, spice or salad dressing product 190. However, it should be understood that these are exemplary, that is, only illustrative, and not intended to be exhaustive.

In this disclosure, all terms that relate to the food, beverage, condiment or spice, or salad dressing component have the meaning commonly used in the food, beverage, condiment, spice and salad dressing arts, respectively. "Food" is defined herein as "material consisting essentially of protein, carbohydrate, and fat used in the body of an organism to sustain growth, repair, and vital processes and to furnish energy. "Food" includes appetizers. Preferably, the word "food" herein is limited to foods as defined above in solid form, to distinguish foods from beverages, though it also includes some liquids that are commonly thought of as foods and not as beverages, such as vegetable oils, syrups, and soups. In this disclosure, "condiment" means something used to enhance the flavor of food; especially, a pungent seasoning. Spices include any of various aromatic vegetable products (as pepper, cinnamon, nutmeg, mace, allspice, ginger, cloves) used in cookery to season food and to flavor foods (as sauces, pickles, cakes) or combinations thereof. Condiments do not include salad dressing, since salad dressings are considered to be a separate category herein. In this disclosure "beverage" means a liquid for drinking, that is, a liquid that is typically drunk for the purpose of refreshment, and specifically does not include water, medicines, or liquid supplementary substances.

Similarly, all terms that relate to the supplement component have the meaning they commonly have in the supplement art; that is, weight loss supplement, brain and nerve function enhancement supplement, cholesterol blocker supplements and cholesterol level improvement supplements, liver enhancement supplements, cardiac health supplement, vascular health supplement, anti-aging supplement, bone health supplement, prostrate health enhancement supplement, joint health supplement, fetus developmental (prenatal) and/or a postnatal breast milk enhancement supplement, eye health enhancement supplement, and enhanced physical performance supplement, respectively, have the meanings commonly used in the respective arts. For example, "weight loss stimulant" excludes things such as eye stimulants and includes only stimulants that are specifically adapted to directly stimulate organs, such as the thyroid, brain, or liver in such a manner as to lead to weight loss. The preferred supplements are not just any fortification thought to be essential or useful to the human metabolism generally or the particular health function, but comprise a combination of ingredients that have been individually or collectively clinically demonstrated to address the specific disorder indicated.

In general, referral to a specific ingredient of a supplement is to be understood as referring to all forms of that ingredient. For example, the terms niacin, niacinamide, nicotinamide, and polynicotinate are essentially synonymous. Similarly, the term "alpha lipoic acid" (ALA) or "lipoic acid" refers to ALA, lipoic acid, thioctic acid, R alpha lipoic acid, and racemic mixtures thereof. As another example, a salt is interchangeable with its corresponding acid, e.g. aspartate and aspartic acid are interchangeable. Similarly, when other ingredients may exist in various forms, a listing of one form refers to all the various forms, unless expressly noted otherwise.

The supplements disclosed herein which are added to the food, beverage, condiment or spice, or salad dressing do not include diet food substitutes, such as fat, oil or sugar substitutes associated with "lite" foods, but are limited to supplements that directly affect body chemistry to bring about specific metabolic action. That is, food substitutes are not included in the supplements portion of the combination according to the invention. However, the terms "food base ", "beverage base", "condiment or spice base", or "salad dressing base" as used herein are intended to include any and all low-fat, low-carbohydrate, or "lite" foods, beverages, condiments, spices and salad dressings also. For example, a low-fat or light salad dressing may be derived from any of the salad dressing bases given below by substituting water and a thickening agent, such as xanthan gum, for all or a portion of the oil given in the formulation, or by other substitutions and formulations known in the salad dressing art. The invention includes the combination of such low-fat foods with the specialized supplements according to the invention.

Turning now to the weight loss supplements that are combined with a food, beverage, condiment or spice, or salad dressing according to the invention, as suggested above, the terms "weight loss supplement" or "weight loss ingredient" as used herein include only substances or formulations which are recognized as weight loss supplements in the art of weight loss supplements. They do not include diet ingredients such as low-fat or light formulations or sugar substitutes. That is, low-fat or light formulations of foods and beverages are included in the food and beverage bases. Weight loss supplements include any and all substances generally known as weight loss supplements, including, but not limited to, fat blockers, carbohydrate blockers, appetite suppressants, metabolic agents, thermogenic agents, weight loss stimulants, nutrient partitioning modulators, and any other substance which is ingested not directly for its food value, but to interact with the body chemistry to prevent other substances with food value from being eaten, to cause other substances with food value to be eliminated without being absorbed, to cause the body to burn more fat or carbohydrate, or to cause the body to metabolize food differently. The groups mentioned above and separately discussed below are those commonly used in the art of weight loss supplements and are provided to make it easier to understand the invention. There is overlap between the groups. That is, those skilled in the art of weight loss supplements tend to use different terminology, depending on their point of view. For example, there is considerable overlap between the metabolizer or thermogenic agent group and the nutrient partitioning modulator group. Therefore, we have included the common terminologies used in the art. Other terminologies certainly are used, and more may develop in the future, so we have also included an "other" group for completeness.

All of the supplements discussed herein are supplements that are known in the metabolic and medical literature, and thus the dosages that are useful are known in these arts. It is not possible herein to reproduce the vast quantity of literature that addresses dosages of particular supplements that have been found to be useful. However, we shall provide exemplary dosages for some supplements to provide illustrative examples. In all cases, the supplement is present in an amount in excess of the amount of the supplement present naturally in the particular food, beverage, condiment, spice, or salad dressing. In the following, where an amount of an ingredient is given, it is intended to be an amount to make an appropriate dosage. In some cases the amount given is the appropriate amount for a daily dosage. In other cases in which it is expected that a food, beverage, condiment, spice or salad dressing, or a combination of these, with the supplement added are expected to be consumed several times a day, the amounts given are essentially halved - that is, it is assumed that the intake of the foods and/or beverages will be twice a day. It should be evident that if particular diets call for ingesting of particular foods, beverages, condiments, spices or salad dressings containing the supplements more than twice a day, then the amounts of ingredients in serving portion should be correspondingly reduced. If a food or beverage amount is such that it is intended for multiple servings, then the amount should also be correspondingly increased. Preferably, the foods, beverages, condiments or spices, and salad dressings are provided with a variety of different dosages that are fractions or multiples of the preferred daily dosage so that a consumer can chose to a dosage that is less or more than the preferred daily dosage as the consumer desires. As an example of how an actual product according to the invention can be varied, exemplary salad dressings are disclosed below. The amounts given for the exemplary salad dressings are the amounts sufficient to fill a small bottle of about twelve to fifteen ounces of weight loss salad dressing. It is intended that the amounts of the ingredients given in the various salad dressing bases should be mixed with the amounts of the ingredients given in the various weight loss supplements. The amounts are designed so that a serving of salad dressing is two ounces. It is assumed that salads are eaten twice a day so that two salads, or four ounces of salad dressing, provide effective daily amounts of weight loss ingredients. The various amounts given for salad dressing bases may be varied as known in the art of salad dressings, and the various amounts given for weight loss ingredients may be varied as known in the art of weight loss supplements. Similarly, for the other foods, beverages, condiments, spices and salad dressings. In the following, "tsp" means teaspoon, "tbsp" means tablespoon, and "mg" is milligrams.

### 2. Food Bases

The food bases do not include chewing gum, inert ingredients by themselves, or other conventional materials for delivering health supplements. The common definition of food necessarily includes only materials that provide protein, fat, and/or carbohydrates. That is, as discussed above, the definition of food is intended to be narrow and is not to be broadened to include materials not commonly recognized as food.

The preferred foods are vegetables and vegetable food products such as baked beans, tomato-based products like tomato paste, stewed tomatoes, spaghetti sauce, pizza sauce, vegetable oils, fruit and fruit food products such as jellies, jams and syrups, cereals, trail mix, cookies, pasta, flours including wheat, soy, oat, and potato flour, whey, chocolate, candy, tofu, bagels, baked goods such as bread, cakes, pizza dough and mixes for these, pancakes and waffles and mixes for these, soups, trail mix, nutritional bars, peanut butter, potato chips, corn chips, crackers, meats, and meat food products, such as lunch meats, hot dogs and sausage, milk food products, such as ice cream, yogurt, cheese and butter.

### 3. Beverage Bases

The term "beverage" is used in its common meaning which does not include water or medicines. Beverages are limited to those which are drunk for refreshment. We divide beverages into non-alcoholic and alcoholic beverages because these are related to very different industries and are thought about differently by those skilled in the art of supplements.
A. Non-alcoholic beverages: The preferred non-alcoholic beverages are soft drinks, tea, coffee, milk, fruit juices, and sports drinks. However, any non-alcoholic refreshment beverage is contemplated by the invention.
B. Alcoholic beverages: The preferred alcoholic beverages are beer, wine, liquors, liqueurs, flavored alcohols, brandies, cocktails, aperitifs, and cordials. However, any alcoholic refreshment beverage is contemplated by the invention

### 4. Condiment and Spices Bases

Condiments include anything commonly referred to as a condiment, including steak sauce, mustard, catsup, soy sauce, chili sauce, chip dips, salsa, pickles, horseradish, curry, chili powder, etc.

Spices include anything commonly referred to as a spice including salt, pepper, vinegar, cinnamon, garlic and garlic powder or garlic oil, onion and onion powder or onion oil, etc.

### 5. Salad Dressing Bases

Any salad dressing can be used as a base for the invention. We shall use salad dressing to provide detailed examples of the process and product of the invention. In these examples, when vegetable oil is mentioned, any vegetable oil may be used, preferably soybean oil or canola oil.

**Table A. Oil And Vinegar Salad Dressing Base**

| |
|---|
| ½ cup water |
| ½ cup vegetable oil |
| ¼ cup vinegar (red wine vinegar may be used) |
| 1 tsp sugar (optional) |
| ½ tsp salt |
| ½ tsp pepper |

Small amounts of spices such as onion powder and/or garlic powder may be added.

**Table B. Caesar Salad Dressing Base**

| |
|---|
| 1 egg, raw |
| 3 tbsp lemon juice |
| garlic (about ½ teaspoon garlic powder or a large clove) |
| 1 cup olive oil (other vegetable oil may be used) |
| ¼ to ½ cup grated Parmesan or Romano cheese |
| 1 tsp high fructose corn syrup |
| 4 tbls anchovy paste |
| ¼ tsp salt and pepper to taste |

**Table C. French Salad Dressing Base**

| |
|---|
| ½ cup vegetable oil |
| ⅓ cup high fructose corn syrup |
| ¼ cup water |
| 3 tbls vinegar |
| ½ tsp salt |
| ½ tsp whey |
| ⅓tsp modified food starch |
| pinch paprika |

Enough yellow food color #5 and/or #6 to give desired color

**Table D. Ranch Salad Dressing Base**

| |
|---|
| ½ cup water |
| ½ cup vegetable oil |
| 3 tbls vinegar |
| 3 tbls sugar |
| 1 egg yolk |
| 2 tbls buttermilk |
| ½ tsp salt |
| ½ tsp whey |
| ½ tsp modified food starch |
| ¼ teaspoon malted dextrin |

**Table E. Bleu Cheese Salad Dressing Base**

| |
|---|
| ½ cup vegetable oil |
| ¼ cup vinegar |
| ¼ cup water |
| 3 tbls blue cheese |
| 2 tbls high fructose corn syrup |
| 1 egg yolk |
| 1tsp lactic acid |

Other salad dressing bases include Russian dressing, Thousand Island dressing, Italian dressing, mayonnaise, balsamic vinaigrette, green goddess, and any other dressing used on salads.

From the above disclosure, and the supplements given below, those skilled in the art of foods will understand the invention and how to implement it in a wide variety of foods, beverages, condiments, spices, and salad dressings.

### 6. Weight Loss Supplements

### A. Fat and/or Carbohydrate Blockers

**Table I. Orlistat**

| |
|---|
| - 1 gram to 2 grams preferred; 1.4 gram to 1.5 gram |
| most preferred. This is a prescription product available, for example, under the name Xenical^{™}. |

**Table II. Natural Carbohydrate and fat blocker**

| |
|---|
| 0.72 grams Vitamin C |
| 6 grams Phaseolus vulgaris (northern white kidney bean) extract |
| 6 grams marine fiber concentrate |
| 192 mg Lagerstoemia speciosa leaf extract |
| 3 grams Gymnema sylvestre leaf extract |
| 0.6 grams bitter melon fruit extract |
| 0.1 grams Vanadium |

The above are the most preferred amounts. The amounts preferably can range from one-fifth to five times the most preferred amounts. Any commercially available fat and/or carbohydrate blocker, such as Chitosol^{™}, Chitosan^{™}, and C-block^{™}, may be used in amounts indicated by their manufacturers.

### B. Appetite Suppressant

**Table III. Phentermine HCL**

| |
|---|
| - 100 mg to 300 mg preferred. 200 mg most preferred. This is a prescription medicine that is available under brand names such as Adipex-P^{™}. Any other prescription appetite suppressant such as phendimetrizine, sibutramine, benzphematamine, and Diethylpropion which are available under brand names Bontril^{™}, Meridia^{™}, Didrex^{™}, and Tenuate^{™}, respectively, and many other such appetite suppressants may be used in appropriate amounts. |

**Table IV. Natural Appetite Suppressant**

| |
|---|
| Guarana extract (22%) - extracted from the seed of the tropical fruit |
| Paullina cupana var. sorbilis. Preferred amount is 1 gram to 20 grams, |
| and most preferably 5 grams. |

### C. Metabolizer or Thermogenic Agent

**Table V. Preferred Natural Thermogenic Formula**

| |
|---|
| 3 grams Garcinia Cambogia fruit extract |
| 24 grams Aspartic Acid |
| 60 mg L-Carnitine (preferably, L-carnitine L-tartrate) |
| 3.6 mg Biotin |
| 2.4 mg Chromium |

**Table VI. Alternative Natural Thermogenic Formula**

| |
|---|
| 0.9 grams mahuang extract containing 72 mg ephedrine alkaloids |
| 3 grams Guarana seed extract containing 0.6 grams of caffeine |
| alkaloids |
| 0.6 grams white willow bark extract |
| 1.8 grams citrus aurantium extract |
| 3 grams Garcinia cambogia fruit extract |
| 150 mg Soybean lecithin |
| 150 mg Uva Ursi leaf |
| 100 mg L-carnitine (preferably, L-carnitine L-tartrate) |

Other typical ingredients used in fat metabolizers and thermogenic agents include lipo-chromizyme, green tea extract, citrus aurantium, hydroxycitric acid, chromium picolinate, and 3-acetyl-7oxo-dehydroepiandrosterone. The invention contemplates that any commercially available metabolizer or thermogenic agent may be used, such as Xenadrine^{™}, Metabolift^{™}, Metabolic Trim 2000^{™}, Fat Ignite^{™}, and Zantrex-3^{™}, in amounts given by their manufacturers.

### D. Weight Loss Stimulants - See Tables III and IV, Appetite Suppressants above. Most appetite suppressants are weight loss stimulants.

### E. Nutrient Partitioning Modulator

This is the most preferred weight loss supplement formulation and therefore it will be discussed in some detail. United States Patent No. US 6,579,866 B2, which issued June 17, 2003 to Larry McCleary is directed to a method and a nutritional supplement composition for modulating nutrient partitioning in the body so as to increase oxidation of fat and promote increased storage of glycogen includes much information on the ingredients of weight loss supplements and the effective dosages and may be referred to more fully understand the invention. The composition of the nutrient partitioning modulator is preferably composed of effective amounts of: HCA (hydroxy citrate); carnitine (sometimes spelled "carnatine"); biotin; and a gluconeogenic substrate preferably selected from one or more of the following: aspartate, lactate, glycerol, and any gluconeogenic amino acid or its alpha-keto analogue. The gluconeogenic amino acid is preferably alanine, arginine, asparagines, aspartic acid, cystine, glutamine, glycine, histidine, hydroxyproline, methionine, proline, serine, threonine and valine. The preferred form of L-carnitine is L-carnitine L-tartrate, which is a form of L-carnitine made by Lonza Group Ltd., Switzerland. This ingredient has a pleasant citrus taste and is therefore particularly well suited as a supplement to salad dressings, some alcoholic beverages, and other foods that traditionally include acidic components or flavorings, such as citrus fruits.

Preferably, the composition of the nutrient partitioning modulator further contains one or more of the following: chromium, CLA (conjugated linoleic acid), coenzyme Q10, EPA (eicosapentanoic acid) (either alone or as part of fish oil), pyridoxine, alpha lipoic acid, magnesium, and Gymnema sylvestre.

HCA and carnitine promote hepatic fatty acid oxidation by activating carnitine palmitoyl transferase (CPT), the rate-limiting enzyme in the fatty acid oxidation process.

EPA (either alone or as part of fish oil) inhibits the enzymes citrate lyase (CL) and acetyl CoA carboxylase (ACC), thus inhibiting the production of malonyl CoA, an allosteric inhibitor of CPT. EPA/fish oil thus acts to disinhibit fatty acid oxidation.

As one of its metabolic effects, CLA promotes fat-to-lean partitioning changes via the activation of CPT.

Thus, HCA, carnitine, EPA, and CLA promote hepatic fatty acid oxidation.

Hepatic fat oxidation produces reducing equivalents, ATP, and acetyl CoA which drive hepatic gluconeogenesis. The elevated acetyl CoA levels activate the liver enzyme pyruvate carboxylase (PC) and high ATP levels inhibit pyruvate dehydrogenase (PDH). These effects synergistically accelerate hepatic gluconeogenesis while simultaneously inhibiting fat synthesis. The reducing equivalents generated by disinhibited fatty acid oxidation are consumed in the reductive synthetic processes of gluconeogenesis.

Hepatic gluconeogenesis acts via the indirect route to expand liver glycogen stores and provides a slow continuous time-release source of glucose from the liver. Both of these have the physiologic effect of profoundly suppressing appetite and increasing energy. These effects are enhanced by the consumption of appropriate amounts of low glycemic index carbohydrates whose glucose content is absorbed slowly over a prolonged time interval, thus acting as a sustained release glucose source emanating from the gut.

It has also been shown that hepatic triglyceride (TG) synthesis and very low density lipoprotein (VLDL) secretion are diminished coincidentally with increasing hepatic fatty acid (FA) oxidation.

Coenzyme Q10 facilitates respiratory chain function and hence augments the process of reverse electron transport. This process plays a key role in the thermogenic effect produced by accelerated fatty acid oxidation.

Biotin induces the up regulation of the enzyme glucokinase (GK) in the pancreas and enhances the process of glucose-induced insulin secretion. In addition, biotin counteracts the effect HCA has on the pancreas. HCA tends to inhibit glucose-induced insulin secretion, while biotin facilitates it by activating GK. Together, HCA and biotin maximize pancreatic fuel homeostasis.

Pyridoxine supplementation augments physiological levels of pyridoxal phosphate. This compound interacts with glucocorticoid receptors to down-regulate their activity and hence to diminish glucocorticoid effects throughout the body. This action tends to decrease visceral fat accumulation as well as promote insulin sensitivity. Improved insulin sensitivity contributes to insulin-induced appetite suppression. In addition, a direct consequence of improved insulin sensitivity is a decrease in the activity of insulin like growth factor (IGF), a potent cancer inductive agent.

Chromium improves insulin sensitivity in the central nervous system and skeletal muscle. The former contributes to insulin-induced appetite suppression at the level of the hypothalamus while the latter improves insulin-induced glucose disposal into skeletal muscle. In the present invention, chromium can be added in the form of a non-toxic salt, such as, e.g., chromium diglycinate, chromium arginate, chromium polynicotinate, and the like.

CLA, alpha lipoic acid, Gymnema sylvestre, coenzyme Q10, and magnesium each have insulin sensitizing effects. In the nutrient modulator, magnesium can be added in the form of a non-toxic salt.

With respect to the amounts of the individual components of the composition of the nutrient partitioning modulator, the term "effective amount" means that amount of the component which, when used in combination with the other components in the composition, will provide the composition with the capability of modulating nutrient partitioning so as to increase oxidation of fat and promote increased storage of glycogen.

Preferably, the composition contains an HCA:carnitine weight ratio of from about 1:10 to about 100:1; an HCA:biotin weight ratio of from about 50:1 to about 2500:1; and an HCA:gluconeogenic substrate weight ratio of from about 5:1 to about 1:60.

Set forth in Table VII below is a preferred embodiment of the composition (excluding inactive ingredients) of the nutrient partitioning modulator. Table VIII sets forth a more preferred embodiment of the composition. The amounts recited in Tables VII and VIII represent the preferred amounts of the ingredients listed which are to be added to the salad dressing bases described above.

**Table VII. Preferred Nutrient Partitioning Modulator Ingredients and Amounts**

| |
|---|
| 6 grams - 450 grams Gluconeogenic Substrate |
| 1.2 grams - 33 grams HCA |
| 30 mg - 30 grams Carnitine |
| 2 mg - 150 mg Biotin |
| 0.6 mg - 12 mg Chromium |
| 0.3 grams - 120 grams CLA |
| 60 mg - 60 grams EPA (alone or as a component of fish body oil) |
| 30 mg - 3 grams Coenzyme Q10 |
| 0.15 grams - 12 grams Alpha Lipoic Acid |
| 1.2 grams - 9.6 grams Magnesium |
| 0.10 grams - 2.4 grams Pyridoxine |
| 0.30 grams - 12 grams (from Gymnema sylvestre) |

**Table VIII. More Preferred Nutrient Partitioning Modulator Amounts**

| |
|---|
| 6 grams - 180 grams Gluconeogenic Substrate |
| 1.5 grams - 30 grams HCA |
| 60 mg - 30 grams Carnitine |
| 3 mg - 60 mg Biotin |
| 1.2 mg - 6 mg Chromium |
| 0.5 grams - 60 grams CLA |
| 0.3 grams - 30 grams EPA (alone or as a component of fish body oil) |
| 60 mg - 2.4 grams Coenzyme Q10 |
| 0.3 grams - 4.8 grams Alpha Lipoic Acid |
| 1.2 grams - 7.2 grams Magnesium |
| 0.15 grams - 1.8 grams Pyridoxine |
| 0.45 grams - 3 grams Gymnemic Acid (from Gymnema sylvestre) |

A supplement with the above ingredients has been clinically tested in a double-blind study and has been shown to be more effective in producing weight loss than the best pharmaceutical weight loss product.

**Table IX. Alternative Preferred Nutrient Partitioning Modulator**

| |
|---|
| 1 - 50 grams L-Aspartic Acid - most preferably 20 grams |
| 1 - 6 grams Garcinia cambogia - most preferably, 3 grams |
| 0.1 grams - 30 grams L-Carnitine (preferably, L-carnitine L-tartrate) - most preferably, 1 gram. |
| 30 mg - 600 mg Ribovflavin - most preferably, 150 mg |
| 0.1 mg - 25 mg Biotin - most preferably, 3.6mg |
| 0.1 mg - 20 mg Chromium polynicotinate - most preferably, 1.5 mg |

As another example, a daily dose of a weight-loss supplement can contain: 2g aspartic acid, 600 mg biotin, 500 mg HCA, 400 mcg chromium, 25 mg carnitine, 500 mg choline, 200 mg TMG, 200 mg SAMe, 200 mg ALA, 25 mg B1, 25 mg B2, 1 mg folate, 275 mg niacinamide, and 1 g creatine. Each dose may include 10g of a medium chain triglyceride (MCT), which augments the activation of futile, thermogenic carbohydrate cycles, further adding to the weight loss activity.

As a further example, a daily dose of a weight-loss supplement can contain: 50 mg phosphatidyl choline, 3 mg R alpha lipoic acid, 5 mg TMG, 10 mg myo-Inositol, 1 mg ALC, 10 mg CLA, 50 mg pyruvate, 600 mcg biotin, 10 mg L-carnitine, 20 garcinia cambogia extract, 10 mcg chromium polynicotinate, 10 mg niacin, 20 mg pantothenic acid, and 20 mg riboflavin. Optionally, 1g of Mag-creatine may also be added.

As used herein with respect to the amount of the composition used in the nutrient partioning aspect of this invention, the term "effective amount" means an amount sufficient to modulate nutrient partitioning in the body so as to increase oxidation of fat and increase storage of glycogen. Preferably, the active-ingredient composition (not including inactive ingredients) of the nutrient partitioning modulator is a per serving dosage of at least about 0.5 gram, more preferably from about 0.5 gram to about 100 grams, and most preferably from about 2 grams to about 20 grams.

The weight loss food, beverage, condiment, spice or salad dressing of this invention is preferably ingested on a daily basis. However, its use on a non-daily basis, e.g., every other day, is still effective. The frequency of use will depend on how fast the individual wishes to lose weight. The more frequently the weight loss food, beverage, condiment, spice or salad dressing, or combination thereof, is used, the faster the weight loss. Thus, daily use of the composition will result in faster weight loss than non-daily use.

### G. Other Weight Loss Ingredients

Most, if not all, weight loss supplements fall into one of the above categories. However, many names are used for the various chemical substances that have weight loss properties. Because a supplement is called by some other name, this does not take it outside the invention if it functions as a fat blocker, carbohydrate blocker, appetite suppressant, metabolic agent, thermogenic agent, weight loss stimulant, nutrient partitioning modulator, or is a substance which is ingested not directly for its food value, but to interact with the body chemistry to prevent other substances with food value from being eaten, to cause other substances with food value to be eliminated without being absorbed, to cause the body to burn more fat or carbohydrate, or to cause the body to metabolize food differently.

Many of the supplements discussed above used as weight loss supplements are also used to improve glucose and insulin metabolism in the body.

### 7. Enhanced Brain And Nerve Function Supplements

United States Patent Application Serial No. 09/837,562 filed April 19, 2001 in the name of Larry McCleary discloses compositions and methods for enhancing and maintaining neurological functions and for normalizing impaired or deteriorating neurological functions. The present invention comprises the incorporation of such compositions in a food, beverage, condiment, spice or salad dressing. That is, as stated above, the present invention is directed to a combination of a food, beverage, condiment, spice or salad dressing with a composition for enhancing brain and/or nerve function.

With respect to the amounts of the individual components of the brain or nerve enhancement supplement of this invention, the term "effective amount" means that amount of the component which, when used in combination with the other components in the brain or nerve enhancement supplement, will provide the brain or nerve enhancement supplement with the capability of treating impaired neurological function in humans, and/or preventing such impaired function or enhancing or maintaining such function.

The nutritional supplement composition for enhanced brain and nerve function was developed systematically in a holistic fashion by identifying the multiple, interrelated pathophysiologic pathways and mechanisms which interact to varying degrees and culminate in specific clinical manifestations of neurological system disease, dysfunction or deterioration. Once the important disease-producing pathways were established, each was individually analyzed, and the loci of specific control mechanisms, modulating factors and rate-limiting steps were identified. At each of these loci, therapeutic interventions were developed that were designed to normalize the individual micrometabolic aberrations. Using this model, a therapeutic paradigm was developed to maximize interventional efficacy by capitalizing on the intrinsic synergy of such an approach.

Thus, the present invention not only improves symptomalogy but actually functions at various sites to produce metabolic and physiologic changes which alter, modulate and improve or reverse the basic abnormalities responsible for the development of various neurological diseases.

Furthermore, since the various aberrant pathways are integrated and interrelated to varying degrees and, therefore, functionally augment each other's pathologic effects, the present invention's holistic approach is able to block this negative synergism.

Preferably, component (A) of the brain or nerve enhancement supplement of this invention is selected from one or more of the following compounds: Co-enzyme Q10, idebenone, taurine, acetyl L-Carnitine (ALC), nicotinamide, phosphatidyl serine, B-vitamins, vinpocetine, oral creatine (which can be provided as creatine monohydrate), cytidine-5'-diphosphocholine, ribose and alpha lipoic acid (ALA).

As mentioned above, dysfunctional bioenergetics involves abnormalities of substrate supply/metabolism, disturbed passage of high energy electrons along the respiratory chain and impaired calcium homeostasis.

Co-enzyme Q10 facilitates high energy electron transfer along the respiratory chain with resultant augmentation of ATP synthesis. Idebenone, a co-enzyme Q10 analogue, may be used in a similar fashion.

Taurine supplementation is desirable in the present invention because of taurine's ability to beneficially modulate calcium balance in neurons.

ALC, a compound with excellent central nervous system penetration, helps fatty acids across the mitochondrial membrane where the fatty acids may be used as an energy source. ALC enhances brain energy production by improving mitochondrial function and is also a beneficial modulator of mitochondrial DNA synthesis - a process which is closely linked with cellular energy metabolism.

NADH is a nutritional substance which facilitates ATP production in neurons.

Phosphatidyl serine acts as a mitochondrial protectant. It is located within the inner mitochondrial membrane and is intimately involved in mitochondrial function.

B vitamins are cofactors in numerous neuronal bioenergetic pathways, and pharmacological supplementation ameliorates or normalizes neurological dysfunction due to poor nutritional intake or excessive neuronal energy demands.

Vinpocetine is a derivative of vincamine which is an extract of the periwinkle. It is a powerful metabolic enhancer by beneficially modulating Krebs Cycle activity and thus stepping up central nervous system (CNS) ATP production.

Oral creatine augments neuronal levels of high energy phosphate compounds in vivo. Oral creatine is preferably provided as creatine monohydrate.

Cytidine-5'-diphosphocholine (CDP-choline) is a donor of choline which is used in the synthesis of both phosphatidyl choline, an important brain phospholipid, and the important neurotransmitter acetyl choline (ACH). Oral administration of CDP-choline also reactivates brain mitochondrial ATPases and the Na/K ATPases.

Ribose is a pentose ring carbohydrate which is well absorbed and may become a rate-limiting substrate in the synthesis of 5-phosphoribose-1-pyrophosphate (PRPP) under conditions of excessive energy demands. Hence, ribose supplementation facilitates cellular energy production and mitochondrial bioenergetics.

Supplementation with the cofactor ALA augments energy production.

In a preferred embodiment, component (A) comprises a combination of oral creatine and ALA. Preferably, in such embodiment, the creatine:ALA ratio ranges from about 1:30 to about 2500:1, more preferably from about 1:10 to about 1000:1.

The brain or nerve enhancement supplement of this invention also contains (B) at least one antioxidant for scavenging free radicals in at least one pathway in the body. Preferably, component (B) is one or more antioxidants selected from the following: idebenone, co-enzyme Q10, vitamin E, ALA, vitamin C, carnosine, tocotrienols, flavonoids, ALC, vinpocetine, selenium, lycopene, creatine, certain amino acids (e.g., arginine, taurine, and cysteine), NADH, resveratrol, ginkgo biloba, oligomeric proanthocyanidins, and phenolic antioxidants.

Although a single antioxidant can scavenge free radicals in the body, antioxidative therapy is most effective when multiple antioxidants are used as a network, where the antioxidants continuously interact with one another in a beneficial fashion to maximally suppress oxidative events in many interrelated pathways. Thus, in a preferred embodiment, component (B) is composed of two or more, preferably all, of the antioxidants listed above.

In a particularly preferred embodiment, component (B) is composed of a combination of taurine and cysteine. Preferably, the taurine:cysteine ratio in such embodiment ranges from about 1:20 to about 60:1, more preferably from about 1:20 to about 15:1.

The brain or nerve enhancement supplement of this invention further contains (C) at least one agent for normalizing or maintaining membrane function and structure in the body.

Preferred agents for component (C) include one or more of the following:
gamma linolenic acid (GLA); highly polyunsaturated long chain fatty acids such as docosahexanoic acid (DHA), phosphatidyl serine (PS), phosphatidyl choline (PC), phosphatidyl ethanolamine (PE), and phosphatidyl inositol (PI); CDP-choline; methyl donors; S-adenosyl methionine, and antioxidants (e.g., one or more of the antioxidants which can be used as component (B) of the brain or nerve enhancement supplement of this invention) and sphingosine.

Essential fatty acid deficiency mimics many of the symptoms of ADD/ADHD. This is consistent with an association between alterations in membrane function and the development of specific neurological disease.

CDP-choline plays a major role in the synthesis of phosphatidyl choline, thus protecting the integrity of neuronal cell membranes, membrane function and repair mechanisms.

Oxidative stress reduces the fluidity of the membranous lipid bilayer with subsequent adverse effects upon embedded functional proteins. Antioxidant therapy as well as supplementation with methyl donors or S-adenosyl methionine (SAMe) can mitigate these adverse effects.

Preferably, component (C) comprises a combination of DHA and phosphatidyl serine (PS), preferably at a DHA:PS ratio of from about 1000:1 to about 1:100, more preferably from about 50:1 to about 1:10.

The brain or nerve enhancement supplement of this invention further comprises (D) at least one agent for normalizing or maintaining normal neurotransmitter function in the body.

Such an agent for component (D) may comprise one or more of the following:
(1) an agent for synthesis of various neurotransmitters, non-limiting examples of such a substrate including choline, CDP-choline, phosphatidyl choline, dimethylaminoethanol (DMAE), and various amino acids; (2) an agent for stimulation of production and secretion of neurotransmitters, non-limiting examples of such substrate being phosphatidyl serine (which increases DO, NE and ACH), CDP-choline (which increases DO, ACH and NE), and vinpocetine (which increases NE); (3) an agent for inhibition of enzymes used to degrade various neurotransmitter molecules within the region of the synaptic cleft, a non-limiting example of such substrate being Huperzine A, an acetylcholinesterase inhibitor; (4) a re-uptake inhibitor (e.g., ritalin, which blocks DA re-uptake); (5) an agent that facilitates improved binding at the receptor site (e.g., phosphatidyl serine); (6) a direct agonist (e.g., pergolide, which is a DA agonist); (7) an agent for induction of enzymes used to synthesize neurotransmitters (e.g., soy phytoestrogens, which increase choline-acetyl transferase (CHAT)); and (8) an agent for augmentation of neurotransmitter receptor sites (e.g., SAMe, which increases ACH receptor sites).

In a preferred embodiment, component (D) comprises a combination of DMAE and huperzine A. Preferably, the DMAE:huperzine A ratio in such embodiment ranges from about 2000:1 to about 1:15, more preferably from about 2000:1 to about 67:1.

Component (E) of the brain or nerve enhancement supplement of this invention is composed of at least one agent for down-regulating activity of cortisol in the body. Preferably, component (E) comprises one or more agents selected from the group consisting of phosphatidyl serine, DHEA, melatonin, and pyridoxine.

The brain or nerve enhancement supplement of this invention also contains (F) at least one agent for suppressing activation of apoptotic pathways in the body.

Preferred agents for use as component (F) include one or more of the following: vinpocetine, huperzine A, magnesium, calcium channel blockers, resveratrol, pycnogenol, and lycopene.

Vinpocetine, huperzine A and magnesium each counteract the action of glutamate at NMDA receptors. Glutamate action at NMDA receptors mediates the activation of excitotoxin-induced apoptotic pathways, which in turn can lead to neuronal degeneration.

Activation of NMDA receptors produces elevations in intracellular calcium concentration. Thus, calcium channel blockers and resveratrol (which also decreases calcium influx) can serve a protective function against such elevations in calcium concentration.

Activation of NMDA receptors also increases nitrergic tone within neurons. Pycnogenol counteracts this effect. Any such induced elevation of intraneuronal nitric oxide contributes to the generation of peroxynitrite which is very sensitive to quenching by the action of lycopene.

In a preferred embodiment, component (F) comprises a combination of huperzine A and vinpocetine. In a particularly preferred embodiment, component (F) comprises a combination of huperzine A and vinpocetine in a huperzine A:vinpocetine ratio of from about 1:2 to about 1:200.

Component (G) of the brain or nerve enhancement supplement of this invention comprises at least one agent for suppressing inflammation in the body.

Preferably, component (G) comprises one or more agents selected from the following: COX-2 inhibitor (e.g., resveratrol), CDP-choline, phosphatidyl serine, DHEA, melatonin, pyridoxine, magnesium, GLA, long chain omega 3 fatty acids, insulin-sensitizing agent (e.g., chromium), antioxidants and vitamin C.

As discussed previously herein, COX-2 mediates inflammation in the body. Thus, COX-2 inhibition forms another therapeutic avenue. Resveratrol is a natural compound with significant COX-2 inhibitory activity.

COX-2 mRNA levels increase in the presence of Interleukin-1 (IL-1). CDP-choline usage lowers IL-1 levels.

Inflammatory processes have been associated with increases in glucocorticoid activity caused by elevated EAA levels within the hypothalamus. Phosphatidyl serine, DHEA, melatonin, vitamin C, and pharmacologic doses of pyridoxine each have anti-cortisolic effects.

Interventions which improve insulin sensitivity are by their very nature anti-inflammatory. Weight loss and specific dietary changes also act in a synergistic fashion to decrease inflammatory mediators.

The mineral magnesium has been shown to have beneficial actions involving the stabilization of neuronal membranes and is able to down-regulate excitatory neurotransmission by direct negative allosteric effects upon the NMDA receptor.

GLA and long chain omega 3 fatty acids play a key role in down-regulating the inflammatory cascade.

Antioxidants are effective at impairing the induction of Nuclear Factor Kappa Beta (NFKB), a potent inflammatory transcription factor.

Component (H) of the brain or nerve enhancement supplement of this invention comprises at least one agent for normalizing or maintaining vascular wall function and structure in the body.

Preferably, component (H) comprises at least one agent selected from the group consisting of magnesium, L-arginine, L-taurine, antioxidants, insulin-sensitivity enhancers, long chain polyunsaturated fatty acids, vinpocetine, choline, betaine, vitamin B₆, vitamin B₁₂, folic acid, and supplemental potassium.

Supplemental magnesium has vasodilatory effects. L-arginine drives the constitutive nitric oxide pathway which further dilates blood vessels and helps to maintain proper endothelial function. Antioxidants play a key role in this regard by preventing inactivation of nitric oxide. Augmentation of insulin sensitivity further enhances these nitric oxide pathways. Supplementation with long chain polyunsaturated fatty acids or vinpocetine enhances red blood cell deformability with subsequent improvements in nutrient delivery through the smallest caliber vascular channels. Elevated serum homocysteine levels are toxic to endothelial cells and impair endothelial cell function.

Augmentation of methylation pathways by the use of nutritional supplements such as creatine, choline, betaine, vitamin B₆, vitamin B₁₂, folic acid, dehydroepiandrosterone (DHEA), phosphatidyl serine, S-adenosyl methionine (SAMe), zinc and selenium enhances vascular function and nutrient delivery to the central nervous system. Methyl donors lower homocysteine levels.

Component (I) of the brain or nerve enhancement supplement of this invention comprises at least one agent for normalizing or maintaining function of nerve growth factors and/or neurotropic factors in the body.

Preferably, component (I) comprises one or more agents selected from the group consisting of estrogenic compounds (e.g., estradiol and soy phytoestrogens), idebenone, and propentofylline.

Estrogenic compounds increase the expression of the anti-apoptotic protein Bcl-XL in hippocampal neurons. This effect represents estrogen transcriptional regulation since a putative estrogen response element has been identified in the bclx gene. Enhancement of Bcl-XL is associated with a reduction in measures of beta-Amyloid-induced apoptosis and inhibition of both caspase-mediated proteolysis and neurotoxicity. Both estradiol and soy phytoestrogens have been shown to significantly increase mRNA levels of BDNF which has antiapoptic activity. Hence, soy phytoestrogens are able to act as estrogenic agonists in the brain without possessing the unwanted side effects of enhancing the risk of breast and uterine cancer. Idebenone and propentofylline both enhance the synthesis of nerve growth factors. Agents tending to augment cholinergic tone have also been shown to have a similar neuronal tropic effect. The hormone insulin is also considered functionally to act as a neurotropic agent. It has anabolic properties which increase neuronal protein synthesis. Neuronal insulin receptors have been described which act to increase glucose metabolism in nerve cells. Resistance to this action of insulin in the brain has been produced by excess glucocorticoid tone as well as by other systemic metabolic abnormalities which decrease insulin sensitivity and subsequently diminish its tropic action.

Component (J) of the brain or nerve enhancement supplement of this invention comprises at least one agent for suppressing toxic metal ionic effects caused by interaction between toxic metal ions and neuronal constituents in the body. As used herein, the term "toxic metal ionic effects" refers to metal ion activities which impair cellular processes in the body. Examples of toxic metal ions include iron, lead and aluminum.

Preferably, component (J) comprises one or more agents selected from the group consisting of desferroximine, alpha-lipoic acid (ALA), zinc, silicon and polyphenolic antioxidants.

Desferroximine and ALA function as chelators for toxic metals in the central nervous system. Zinc, while not acting as a true metal chelator, acts to reverse the adverse effects caused by the interaction of lead with the NMDA receptor. Silicon reduces neuronal aluminum accumulation which may be related to the development of Alzheimer's disease. Polyphenolic antioxidants achieve iron detoxification.

The brain or nerve enhancement supplement of this invention further comprises (K) at least one agent for normalizing or maintaining methyl metabolism in the body.

Preferably, component (K) comprises one or more agents selected from the group consisting of dehydroepiandrosterone (DHEA), phosphatidyl serine, S-adenosyl methionine (SAMe), choline, folic acid, vitamin B₆, vitamin B₁₂, betaine, zinc, selenium, and creatine.

Zinc also plays a key role because of the zinc finger appendages on one of the most important enzymes in DNA regulation, specifically, DNA methyl transferase.

Vitamin B₆, DHEA and phosphatidyl serine exhibit cortisol-ameliorating effects. The stress reduction element of the present invention also produces cortisol-ameliorating effects.

SAMe is a high energy methyl donor. SAMe's methyl groups make possible the production of carnitine and creatine (both of which play key roles in cellular bioenergetics); the neuronutrient, acetyl-L-carnitine; the stress hormone and neurotransmitter, adrenaline; the neuronutrient and chief membrane phospholipid, phosphatidyl choline; and the DNA bases, methyladenine and methylcytosine.

SAMe also plays a major role in the synthesis of acetyl choline (ACH), which is one of the most important neurotransmitters, especially involving memory, attention, cognition and executive functioning. The provision of exogenous SAMe has been beneficial as a stand alone agent in ADD/ADHD trials, and use in treatment for depression has been described.

Selenium has been shown to raise SAMe levels when supplemented in its selenomethionine form.

The brain or nerve enhancement supplement of this invention also contains (L) at least one agent for normalizing or maintaining metabolism of insulin and glucose in the body. Component (L) is designed to improve systemic sensitivity to the insulin. Mechanisms which augment insulin action at the nerve cell membrane facilitate the contribution of glucose to the cellular production of ATP and, in so doing, improve neuronal bioenergetics.

Preferably, component (L) comprises (a) one or more agents which down-regulate glutamatergic tone (e.g., huperzine A or magnesium supplementation), and/or (b) one or more insulin-sensitizing agents (e.g., chromium).

Component (M) of the brain or nerve enhancement supplement of this invention comprises at least one agent for up-regulating activity of heat shock proteins in the body.

Set forth in the Table X is a preferred embodiment of the orally administered brain or nerve enhancement supplement (excluding inactive ingredients) of this invention. The amounts recited in the table represent preferred and more preferred daily dosages of the ingredients listed.

**Table X**

| **Ingredient** | **Effective Range** | **Preferred Range** |
|---|---|---|
| Thiamine | 1 mg - 200 mg | 10 mg - 100 mg |
| Riboflavin | 1 mg - 1000 mg | 10 mg - 500 mg |
| Niacin | 1 mg - 3000 mg | 25 mg - 750 mg |
| Carnosine | 1 mg - 1000 mg | 20 mg - 500 mg |
| Pyridoxine | 1 mg - 300 mg | 25 mg - 200 mg |
| Folic Acid | 50mcg - 10 mg | 200 mcg - 2 mg |
| B 12 | 25 mcg - 2 mg | 100 mcg - 1 mg |
| Biotin | 10mcg - 10 mg | 50 mcg - 2 mg |
| Pantothenic Acid | 1 mg - 500 mg | 10 mg - 200 mg |
| Vitamin C | 10 mg - 2000 mg | 50 mg - 1000 mg |
| Vitamin E | 1 IU - 2000 IU | 10 IU - 1000 IU |
| Magnesium (chelated) | 10 mg - 2000 mg | 100 mg - 1200 mg |
| Zinc (chelated) | 2 mg - 50 mg | 5mg - 25 mg |
| Selenium (as selenomethionine) | 10 mcg - 600 mg | 20mcg - 300 mcg |
| Chromium | 25 mcg - 2000 mcg | 50 mcg - 1200 mcg |
| Potassium | 5 mg - 150 mg | 20 mg - 100 mg |
| OPC | 2 mg - 150 mg | 10 mg - 75 mg |
| Cysteine | 100 mg - 2000 mg | 200 mg - 1000 mg |
| Taurine | 100 mg - 6000 mg | 500 mg - 3000 mg |
| Acetyl L-Carnitine | 10 mg - 3000 mg | 25 mg - 2000 mg |
| Creatine Monohydrate | 100 mg - 25 g | 500 mg - 5 g |
| DMAE | 20 mg - 2000 mg | 50 mg - 200 mg |
| Choline | 20mg - 10 g | 50 mg - 2 g |
| Inositol | 20mg - 10 g | 50 mg - 2 g |
| Phosphatidyl Serine | 5mg - 1000 mg | 50 mg - 400 mg |
| Phosphatidyl Choline | 5 mg - 2000 mg | 50 mg - 1000 mg |
| Phosphatidyl Ethanolamine | 5 mg - 1000 mg | 50 mg - 400 mg |
| Phosphatidyl Inositol | 5mg - 2000 mg | 50 mg - 1000 mg |
| DHA (docosahexanoic acid) | 10mg - 5000 mg | 25 mg - 2000 mg |
| Vinpocetine | 1mg - 30 mg | 2 mg - 20 mg |
| Huperzine A | 10 mcg - 500 mcg | 50 mcg - 300 mcg |
| Coenzyme Q10 | 1mg - 1000 mg | 5 mg - 400 mg |
| L-Arginine | 100 mg - 9000 mg | 200 mg - 8000 mg |
| Idebenone | 100 mg - 400 mg | 270 mg - 360 mg |
| GLA | 5 mg - 500 mg | 50 mg - 200 mg |
| Silicon | 2 mg - 40 mg | 5mg - 20 mg |
| Alpha Lipoic Acid | 10 mg - 1000 mg | 50 mg - 600 mg |
| Resveratrol | 10 mg - 300 mg | 50 mg - 200 mg |
| Soy Isoflavones | 10 mg - 200 mg | 50 mg - 100 mg |
| CDP-Choline | 25 mg - 1000 mg | 100 mg - 400 mg |
| NADH | 1 mg - 20 mg | 5 mg - 10 mg |
| DHEA | 5 mg - 200 mg | 25 mg - 100 mg |
| Melatonin | 5 mg - 15 mg | 1 mg - 5 mg |
| Ribose | 500 mg - 10 g | 1 g - 5 g |
| Lycopene | 1 mg - 30 mg | 5 mg - 15 mg |
| Betaine | 100 mg - 3000 mg | 500 mg - 1500 mg |
| Gingko Biloba | 10 mg - 1000 mg | 25 mg - 600 mg |

A supplement with the above ingredients in the preferred range of amounts has been clinically tested in a double-blind study and has proven to be effective in enhancing cognitive and brain and nerve functions.

Preferably, the active-ingredient brain or nerve enhancement supplement of this invention is added to the food, beverage, condiment, spice or salad dressing in a daily dosage of at least about 1 gram, more preferably from about 1 gram to about 40 grams, most preferably from about 0.25 grams to about 30 grams. For foods that are usually consumed more than once a day, the dosage is preferably halved. When inactive ingredients are present in the brain or nerve enhancement supplement, the inactive ingredients of the brain or nerve enhancement supplement can be present in any conventional amount used in orally or parenterally administered brain or nerve enhancement supplements.

### 8. Enhanced Supplements Designed To Assist Or Improve Liver Function And/Or Prevent Liver Damage And/Or Disease And Address Other Maladies Associated With Alcohol Consumption

A. Weight Loss Supplements. A major side affect of alcohols consumption is the accumulation of fat about the liver. This is caused by the fact that alcohol cannot be stored in the body, and the body reacts to the presence of alcohol by burning it in the liver. The liver is also the major fat burner in the body. To the extent that the liver function is turned to burning alcohol, it cannot burn fat, and the fat is stored in the body, particularly in the liver. This is the major cause of fatty liver. Fatty liver may progress to liver inflammation, fibrosis (cirrhosis), and necrosis. Thus, the addition to alcohol of any of the above weight loss supplement ingredients can assist in preventing liver damage. These include fat and/or carbohydrate blockers, appetite suppressants, metabolizers or thermogenic agents, weight loss stimulants, and nutritional partioning modulators.
   The preferred amounts of individual ones of these supplements that should be added to a serving of alcohol, are the same as the amounts that are preferably added to a serving of salad dressing as given above.
   The preferred supplements to be added to alcohol include those that do not have stimulant or other effects that may not be compatible with alcohol. The nutrient partioning modulators are much preferred. Some of these nutrient partitioning modulators include aspartate, aspartic acid, pyruvate, serine, glycine, carnitine, Garcinia cambogia, and biotin.
B. Free electron control. A major factor responsible for the synthesis of fat in a liver cell is its redox state. The more reduced the chemical state, the more fat is synthesized. This causes fat buildup in the liver cell. A category of agents is available that beneficially modulate the redox state by making it less chemically reduced. This reverses the fat synthetic processes caused by alcohol intake. These ingredients include: choline; carnitine; acetyl carnitine; tri-methyl glycine; phosphatidyl choline; glyceryl phosphoryl choline; s-adenosyl-methionine; B vitamins and lipoic acid; policosanol; and antioxidants. Preferably, a combination of these ingredients are used, because the agents work together synergistically as a network. Agents that enhance these beneficial effects include policosanol and the broad category of antioxidant compounds. Policosanol comprises one or more of the following agents: hexacosanol, octacosanol, tetracosanol, triacontanol, dotriacontanol, tetratriacontanol, hexatriacontanol, and docosanol. These may be used alone or with an emulsifying,and/or absorption enhancing compound such as lecithin.
C. Glycemic Index Modulators. A major cause of liver damage due to alcohol consumption is the affect of alcohol on the glycemic index. The glycemic response of a food is a measure of the food's ability to elevate blood sugar. Foods that elevate the blood sugar quickly cause the body to produce insulin. As the insulin enters the blood stream, it causes the blood sugar levels to fall. The body responds to a falling blood sugar level by stimulating the appetite. This stimulation is not proportional to the absolute blood sugar level but the rate of change of the blood sugar level. Thus, high glycemic index foods and beverages cause the blood sugar level to spike, and on the downward edge of the spike, appetite increases. In this way high glycemic index foods can lead to weight gain. Alcohol and high sugar content drinks, such as soft drinks have a high glycemic index, and thus use of these beverages leads to unhealthy overweight conditions. Soluble fiber is known to link to starch and other carbohydrate molecules and make the body work harder to break the carbohydrate down. Thus, the addition of soluble fibers, such as flax seed, psyllium and other natural and man-made soluble fibers, if dissolved in high glycemic index beverages, such as some alcoholic beverages and high sugar beverages can lower the glycemic index of these beverages and reduce the incidence of weight gain from these beverages.
D. Essential Nutrients. A major side affect of alcohol consumption is malnutrition. Thus, the addition of essential nutrients including vitamins and minerals to alcohol products can prevent malnutrition and may also directly improve liver health. Preferred nutrients include thiamin, B-vitamins, and magnesium.

The invention also contemplates that any of the above supplements can be added to any other food, beverage, condiment, spice or salad dressing, particularly those often eaten with alcohol, such as pretzels and beer nuts.

### 9. Cholesterol Absorption Blocker And/Or Cholesterol Lowering Supplements

An important aspect of the invention is the combination of cholesterol blocker supplement or cholesterol level improvement supplement with a food, beverage, condiment, spice or salad dressing. It is well known that cholesterol is a key factor in heart attacks and strokes, vascular disease, brain health and presents other health risks. Up to now, cholesterol blockers and cholesterol level improvement supplements have been available only in supplements that, as discussed above, are difficult to integrate into a practical, every day diet. The invention includes the incorporation of cholesterol blockers and cholesterol level improvement supplements in common foods and beverages, particularly those already in common use among persons with high cholesterol, such as foods with soluble fiber, such as flax seed, psyllium, oat bran, etc. Agents in this category include gugulipid and beta-sitosterol.

Statin drugs, such as Lipitor and Mevacor, are another class of cholesterol level improvement agents. Recently, it has also been suggested that these drugs are useful in weight reduction. These drugs block a critical enzyme in the pathway that synthesizes cholesterol in the human metabolic system. Inflammation is a well-recognized mediator of cardio-vascular disease (atherosclerosis). These drugs are prevent such inflammation and are also known to decrease the incidence of Alzheimer's disease.

Policosanol is a natural supplement that has also been shown to decrease vascular inflammation and improve cholesterol levels: i.e., lower total cholesterol, elevate good cholesterol (HDL(high density lipoprotein)), and lower the ratio of total cholesterol to HDL cholesterol.

Plant sterols, such as those obtained from soy products, are also included in this invention.

The invention contemplates the incorporation of these food supplements into a food, beverage, condiment, spice or salad dressing, particularly those commonly consumed by persons with high cholesterol, such as such as foods with soluble fiber, such as flax seed, psyllium, oat bran, etc.

While the Statin drugs are effective cholesterol synthesis blockers, they also have side effects that can be significant, such as liver necrosis and muscle necrosis. Thus, the preferred cholesterol controlling agents are derivatives of naturally occurring sources. Suitable natural cholesterol controlling agents typically are aliphatic alcohols extracted from rice, sugar cane and other sources. The preferred supplement in this category is policosanol. Policosanol acts on the same pathway as Statin drugs. However, instead of blocking the enzyme, it corrects the problem at the source - it down regulates the synthesis of the enzyme. That is, instead of blocking the enzyme, it decreases the amount of the enzyme in the human metabolic system.

While policosanol acts in a different way then the Statin drugs, the end result is the same: lower LDL cholesterol and the decrease in the LDL/HDL ratio. In fact, the improvement in the LDL/HDL ratio is generally considered to be superior to the Statin drugs. At the same time, policosanol does not have the negative side effects of the Statin drugs. Thus, it is the preferred cholesterol controlling supplement. It has been shown to be effective in lowering LDL cholesterol and decreasing the LDL/HDL cholesterol ratio in human clinical trials. A more preferred combination comprises policosanol in combination with coenzyme Q, particularly coenzyme Q10.

Another feature of policosanol is that it is a lipid. Lipids typically mix well with salad dressing and other foods. The preferred daily dose of policosanol is 10 milligrams, though other suitable doses are contemplated by the invention.

There are other serum lipid parameters that affect the incidence of vascular disease. An example is the triglyceride level. This is an important direct risk factor for vascular disease but also adversely modulates lipoprotein particle size/density which also affects vascular disease. Policosanol beneficially modulates triglyceride levels as do the Statin drugs.

### 10. Cardiac Enhancement Supplements

In addition to vascular cardiac disease, there is a condition called heart failure which relates to the deterioration of cardiac pump function. This is manifest clinically as congestive heart failure. Supplements such as coenzyme Q beneficially modulate this condition. In addition, those supplements indicated above to be weight loss supplements and cholesterol blockers can have a beneficial effect with respect to cardiac enhancement. The invention contemplates the combination of a food, beverage, condiment, spice or salad dressing with any of these supplements.

### 11. Cardio-Vascular Enhancement Supplements

There are other causes of cardio-vascular disease then those related to elevated cholesterol. A major group in this category involves elevation of serum homocyst(e)ine levels. This may be treated by supplementation of folate, B6, B12, and other methyl donating compounds, such as TMG (trimethylglycine). The invention contemplates the combination of a food, beverage, condiment, spice or salad dressing with any of these supplements.

### 12. Bone Enhancement Supplements

Osteoporosis is a near epidemic condition involving loss of bone. This predisposes to hip, spine, wrist, and other fractures. Currently, the only treatment is pharmaceutical. The supplements in this bone enhancement group include potassium salts (such as citrate and bicarbonate) in combination with calcium, magnesium, boron, and vitamin D, calcium citrate and phytoestrogens such as ipriflavone. Also included is black cohosh, an agent which acts at many sites. Citracal^{™} is a well-known bone supplement that can be added to foods and beverages. The invention contemplates the combination of a food, beverage, condiment, spice or salad dressing with any of these supplements.

The supplement art has stressed calcium supplementation as the cornerstone of a successful program for bone health. While calcium deficiency may certainly be a risk factor for osteopenia, bone disorders are not necessarily cured by supplemental calcium. For example, skeletal bone loss is associated with inflammatory processes. It is believed that the Statin category of drugs ameliorates osteoporosis by an anti-inflammatory mechanism. Pro-inflammatory transcription factors AP-1 and NFKB play a role. By limiting reductive stress and its subsequent effects upon AP-1 and NFKB, anti-inflammatory supplements can prevent bone loss.

Examination of evolutionary nutrition and its effects upon bone metabolism helps explain issues of bone health. Neanderthal nutritional modeling studies arrive at similar conclusions to those of direct studies of modern day hunter-gather cultures consuming their native diets. When interpreted from the perspective of dietary intake and its effect upon nutritional acid load to the body, great differences are noted between our "ancestral" diet and current dietary intake. Modern food choices expose us to a large acid load, day after day, throughout our lifetimes. In comparison, our evolutionarily based diet delivered a neutral, or even slightly alkaline, load. This contrasts starkly with modern cuisine. This situation is at nutritional odds with our genetic legacy and-metabolic impacts.

The effect of chronic acid loading is to lower the pH of the blood. The pH in blood is metabolically regulated in a healthy individual and is kept within a narrow range. This is necessary because of the severe consequences of even minor pH changes. The appropriate bodily response to an acid load is to buffer the pH change. This buffering effect tends to restore pH to the normal range. This is a beneficial physiologic action and forms the basis for regulation of the pH in blood.

There is, however, a dark side to this process if it continues for an extended period of time. This is easily understood if the processes responsible for this buffering are investigated. The largest pool of acid buffer in the body is its carbonate reservoir. This resides almost exclusively in our bone mass where it is anchored by the mineral matrix. Calcium is one of these binding agents. As carbonate leaves the bone matrix, on its way to the blood stream where the pH buffering occurs, calcium is an unwilling participant in the same journey. This process, the simultaneous loss of bone calcium and carbonate, over time induces a slow, gradual progressive loss of bone mass and manifests itself as osteoporosis.

The calcium that leaves the bone reservoir makes its way to the blood stream. Just as blood pH is carefully regulated, so is the blood calcium level. To prevent any significant rise in the blood calcium level, renal compensatory mechanisms are activated. These involve the loss of calcium in the urine. In this manner, the majority of the calcium lost from bone ends up in the urine. From this perspective it is easy to see why calcium supplementation is not the treatment of choice for osteoporosis. At best, it might only prevent calcium deficiency from developing. Indeed, many individuals on high dose calcium supplementation protocols develop calcium stones in their urinary tract.

Chronic nutritional metabolic acidosis may be viewed as an irritant to the body, much like infection or inflammation. The most logical treatment for osteoporosis is nutritional. Inappropriate dietary choices cause the calcium loss, so appropriate dietary choices may prevent the calcium loss. As explained above, this does not include high-dose calcium supplementation.

When for any reason appropriate dietary choices are impractical, then a backup plan that otherwise addresses the causative mechanism is indicated. This includes the use of dietary supplements that correct the diet-induced metabolic acidosis and its deleterious effects upon bone. Included in a preferred formulation is a potassium salt having an anion that is either bicarbonate or a metabolic precursor, such as citrate. Potassium bicarbonate (KHCO₃) may be taken easily, is well tolerated and immediately corrects the metabolic acidosis. This obviates the need for carbonate from bone to act as a buffer and physiologically remedies the problem of acidosis related bone loss.

A more complete program also includes an formulation to treat the inflammatory component of the disorder. Such a composition includes a combination of anti-aging agents discussed below in combination with potassium bicarbonate or citrate. Calcium and/or vitamin D or an analog are optionally included. The chosen agents should be well tolerated orally, complement calcium metabolism, have a good safety profile, and be active in bone tissue. An exemplary daily dose of such a composition is as follows: 6g KHCO₃, 100mg Serine, 100 mg Alpha lipoic acid, 50 mg B6, 1 mg B12, 1 mg Folate, 250 mg Choline, 300 mg Carnitine, 500 mg TMG, and 300 mgALC. Optionally, the dosage may include: 400 IU Vitamin D and 1000 mg Calcium (chelate). In accordance with the invention, this formulation is combined with a food, beverage, condiment, spice or salad dressing.

### 13. Fetus Developmental (Prenatal) Enhancement Supplements/Postnatal And Breast Milk Enhancement Supplements

Central nervous system development may be beneficially modulated by supplementation during pregnancy with omega 3 fatty acids (alphalinolenic acid, EPA (eicosapentanoic acid), DHA (docosahexanoic acid), methyl donors such as folic acid and choline and any choline donors, such as phosphatadyl choline. The methyl donors such as folic acid and choline and any choline donors may be included in infant formula. All of the above ingredients may be added to the postpartum maternal diet by including in foods, for example salad dressings, bars etc. The invention contemplates the combination of a food, beverage, condiment, spice or salad dressing with any of these supplements.

### 14. Prostate Health Enhancers

Agents which are food supplements that improve or maintain prostate health include selenium, saw palmetto, resveratrol, vitamin D, and policosanol. The invention contemplates the combination of a food, beverage, condiment, spice or salad dressing with any of these supplements.

### 15. Anti-Aging Supplements

Anti-aging supplements include any and all substances generally known as anti-aging supplements, including, but not limited to anti-oxidants and anti-reductive agents. As discussed above, it is generally accepted today that aging is associated with free electron production and adsorption in the animal cell. It is widely accepted that anti-oxidants counteract the adsorption of free electrons in cells. Therefore, one aspect of the invention is the incorporation of anti-oxidants in foods and beverages. In particular, the invention includes one or more anti-oxidants, such as water soluble antioxidants, e.g., vitamin C, lipid soluble anti-oxidants, e.g., vitamin E, and polyphenolic antioxidants, e.g., green tea extract and resveratrol. The invention contemplates the combination of a food, beverage, condiment, spice or salad dressing with any of these supplements.

However, the invention goes further than conventional supplements to suppress aging. The invention identifies a plurality of ingredients that influence electron flux; and formulating combinations of supplements that limit the accumulation of high-energy electrons potentially available to the electron transport chain. The invention also includes, as an anti-aging supplement, the combination with a food, beverage, condiment, spice or salad dressing of supplements that: a) decrease the number of electrons available to the transport chain; b) neutralize electrons that boil off before they associate with an oxygen molecule; c) compete favorably with oxygen for associating with electrons that do boil off; d) provide compounds that bond with electrons and shuttle them away from the transport chain.

Small electrophilic biomolecules are known to have a strong relationship to free electrons. These include TMG (Trimethylglycine), choline, phosphatidyl choline, SAMe (S-adenosyl methionine), carnitine, ALC (acetyl L-carnitine), propionyl carnitine, (myo)inositol, sphingomyelin, glycerylphosphorylcholine, and acetylcholine. Each of these molecules differs in its respective chemical structure and recognized functions. They do, however, contain a common chemical moiety. They have a positively charged nitrogen (N) or sulfur (S) atom in their structure, rendering an adjacent methyl group electron deficient. They react with electron donors in an irreversible reaction by the transfer of a pair of electrons to the electron-deficient methyl group, thus splitting this group from the positive N or S moiety. No toxic products are generated by this chemical reaction. This reaction transforms the electron donor into a more oxidized form (i.e., NADH is transformed into NAD+). In this example, the nucleophilic hydride ion from NADH is transferred to the electron deficient methyl group of the biomolecule. This is followed by the splitting off of the methyl group and the formation of methane associated with the oxidation of NADH to NAD+. Since the reaction consumes the biomolecule in the reaction, a continuous supply is required to maintain the effect.

Methyl group control is also important to control the aging process. Thus, anti-consumptive methyl agents, including creatine and folic acid are useful as anti-aging supplements. These ingredients provide a continuous supply of methyl groups that help replace methyl groups lost by other agents while performing their prescribed role.

Electron acceptors such as biological macromolecules, including DHA (docosahexanoic acid), EPA (eicosapentanoic acid), and albumin are also useful in as anti-aging supplements. These are molecules that, by their size, configuration, numbers of disulfide bonds, or a combination of these features, undergo chemical reduction. That is, they are electron acceptors, sometimes at one molecular location, but typically at multiple separate locations in each of the molecules. These reactions are either reversible or irreversible. When irreversible, then once all the sites available for acceptance of electrons are consumed, they are removed and biologically recycled. In this sense, they are large, sacrificial, anti-reductive biological compounds. DHA and EPA are both long-chain fatty acids. Albumin is a protein. These structural differences make them useful in different bodily locations. Albumin is primarily a plasma protein, and the fatty acids are usually found in cellular biomembranes. DHA has more pronounced structural utility, and EPA is involved in cellular signal-transduction pathways. The fatty acids have different numbers of double bonds, which also affect their chemical reactivity. EPA modulates membrane phospholipase activity and membrane turnover. Agent composition, amounts and ratios also depend upon such factors as the clinical condition being treated, the degree of inflammation present, and the omega-6/omega-3 ratio, as well as absolute levels of omega-6 and omega-3.

Oxaloacetate (OAA) precursors, including PYR (Pyruvate), ASP (Aspartate), GLY (Glycine), and SER(Serine) is another group of anti-aging compounds. These are all small amino or alpha-keto acids, which are biochemical precursors of oxaloacetate via differing pathways and under different metabolic conditions. This is significant because of the ability of OAA to function as an electron-acceptor in association with the oxidation of NADH to NAD+. Depending upon the prevailing chemical environment in the cell, one agent may be selected over others due to its preferred metabolism to OAA. Other factors useful in the determination of one of these agents over another also involve other metabolic pathways they modulate or in which they react. These are different from agent to agent and involve considerations involving energy generation, protein synthesis, neurotransmission, and phospholipid synthesis, and may also include electron-shuttle function. Some of the functions of these ingredients involve allosteric modulation of enzymes, substrate-driven reactions, cyclic pathways or post-transcriptional modification.

The B vitamins and structurally related entities, including folate, riboflavin, B1, B3, niacinamide, nicotinamide, polynicotinate, B6, B12, biotin, pantothenic acid, pyrimidine, pyrazine, and other aromatic rings, and other related chemical species are also useful in anti-aging formulations. These compounds are able to undergo reductive addition reactions. Selection of one entity over another is determined in part by other B vitamin properties, (e.g., the enzyme for which it acts as a co-factor, location of the enzyme, effects upon cyclic GMP and other separate biochemical profiles).

Electron cycling agents, including coenzyme Q10, lipoic acid, and acetoacetate also play a role in regulating free electrons. These compounds are easily cycled by accepting and then releasing electrons. This process modulates the NADH redox state, alters other biochemical characteristics of each agent, and forms a cyclic rather than linear biochemical pathway. Coenzyme Q10 is found primarily within membranes, and is frequently associated with the electron transport chain along the inner portion of the inner mitochondrial membrane. It also has anti-oxidant functionality. Lipoic acid is both water and lipid soluble and has access to most biological compartments. Also, by being a cofactor for enzymes, it plays a central role in energy generation and mechanisms of glucose and insulin metabolism. Lipoic acid is able to bind transition metals, thereby modulating their role in numerous important physiological reactions. Acetoacetate is a ketone body used as a fuel source and a precursor of neurotransmitters, and it has access to the brain compartment.

As indicated above, iron-binding agents, such as polyphenolic agents and desferoximine can play important roles in controlling aging. The reduction of ferric to ferrous ion facilitates the release of an iron atom from protein-binding agents (e.g., ferritin). This causes the iron transition metal to act catalytically by facilitating the generation of electrons, which contribute to the production of ROS and subsequent tissue damage. This damage involves disruption of DNA, lipid structures, and proteins. Iron-binding agents have the ability to bind and inactivate free iron, which is the basis for their beneficial actions. Polyphenolic compounds also are powerful anti-oxidants, modulate many intra-cellular signaling pathways, and protect lipoproteins from oxidative stress.

Listed In Table XI below, are exemplary anti-aging agents and dosage ranges used in accordance with the invention. In preferred embodiments, a plurality of anti-aging agents are used in combination.

**Table XI**

| **anti-aging Agent** | **Daily Dose Range** | **Daily Dose Preferred** |
|---|---|---|
| Creatine | 10 mg to 30 g | 1 g to 10g |
| Acetylcholine | 1 mg to 1 g | 10 mg to 500 mg |
| Propionyl L-carnitine | 1 mg to 10 g | 20 mg to 2 g |
| Myo-inositol | 10 mg to 10 g | 100 mg to 2 g |
| Pyruvate (Pyruvic acid) | 50 mg to 30 g | 500 mg to 20 g |
| Aspartate (Aspartic acid) | 50 mg to 30 g | 500 mg to 20 g |
| Serine | 50 mg to 30 g | 500 mg to 20 g |
| Glycine | 50 mg to 30 g | 500 mg to 20 g |
| Coenzyme Q10 | 1 mg to 2,000 mg | 10 mg to 800 mg |
| Alpha Lipoic Acid (Lipoic acid, r lipoic acid, r alpha lipoic acid, rademic mixture) | 1 mg to 4,000 mg | 10 mg to 1,400 mg |
| Eicosapentanoic Acid (EPA) | 10 mg to 4,000 mg | 50 mg to 2,000 mg |
| Docosahexanoic Acid (DHA) | 10 mg to 4,000 mg | 50 mg to 2,000 mg |
| Trimethylglycine (TMG) | 100 mg to 5,000 mg | 500 mg to 3,000 mg |
| Dimethylglycine (DMG) | 100 mg to 5,000 mg | 500 mg to 3,000 mg |
| Choline | 25 mg to 6,000 mg | 100 mg to 2,000 mg |
| Phosphatidy Choline I | 25 mg to 20 g | 500 mg to 5 g |
| SAMe | 10 mg to 3,000 mg | 100 mg to 1,600 mg |
| Folic Acid (folate) | 100 mcg to 20 mg | 400 mcg to 10 mg |
| Riboflavin | 1 mg to 100 mg | 5 mg to 30 mg |
| B1 | 1 mg to 400 mg | 10 mg to 100 mg |
| B3 | 1 mg to 4,000 mg | 10 mg to 2,000 mg |
| B6 or pyridoxine (pyridoxyl phosphate) | 1 mg to 400 mg | 10 mg to 200 mg |
| B12 | 10 mcg to 1,000 mcg | 20 mcg to 500 mcg |
| Biotin | 10 mcg to 20 mg | 300 mcg to 12 mg |
| Pantothenic Acid (pantothenate) | 1 mg to 1,000 mg | 10 mg to 250 mg |
| Carnitine 5 | 5 mg to 20 g | 20 mg to 10 g |
| Acetyl L-carnitine | 1 mgto 10g | 20 mg to 10 g |
| Polyphenolic anti-oxidants | 1 mg to 2 g | 20 mg to 1 g |
| Sphingomyelin | 5 mg to 5 g | 20 mg to 2 g |
| Glyceryl phosphoryl choline | 5 mg to 6 g | 20 mg to 4 g |
| Magnesium-creatine 10 | 10 mg to 50 g | 50 mg to 20 g |
| Albumin | 10 mg to 100 g | 20 mg to 50 g |
| Acetoacetate 10 | 10 mg to 300 g | 50 mg to 100 g |

Listed below are exemplary anti-aging agents and corresponding agent ratios in accordance with the invention.

| Agent Ratios | Range |
|---|---|
| Creatine/TMG | 1/20 to 30/1 |
| Creatine/Carnitine | 1 /10 to 250/1 |
| Creatine/Pyruvate | 1/20 to 25/1 |
| Creatine/Aspartate | 1/10 to 25/1 |

Many of the agents listed may occur in long polyene chain form. These are also to be included in the invention. Such formulations may include, for example, poly(ene) phosphatidyl choline.

An exemplary embodiment in accordance with the invention suitable for an anti-aging supplement, in terms of one composite daily dose is as follows: 100mg coenzyme Q10, 300 mg R alpha lipoic acid, 1 g Eicosapentanoic acid (EPA), 500 mg trimethylglycine, 3 g hosphatidyl choline, 200 mg S-adenosyl methionine (SAMe), 500 mg Carnitine, 2 g aspartic acid, 25 mg vitamin B1, 25 mg vitamin B2, 25 mg vitamin B3, 25 mg vitamin B5, 25 mg vitamin B6, and 800 mcg folic acid. A dose may also include: 1 mg biotin, 500 mg hydroxycitric acid, and 1 mg vitamin B12.

Another exemplary embodiment in accordance with the invention suitable for anti-aging formula is the following Daily administration of a food and/or beverage containing the following ingredients is recommended for a period of time necessary to achieve a desired result, typically for two months to twelve months, or until resolution of hepatic fat accumulation and/or inflammation. Two doses to three doses per day are used. One dose contains: 2g creatine; 200 mg, R alpha lipoic acid, 400 mg SAMe, 500 mg EPA, 500 mg TMG, 20 mg Green tea leaf extract, 3g pyruvate, 2 g phosphatidyl choline, 500 mg ALC, 25 mg vitamin B1, 25 mg vitamin B2, 25 mg vitamin B3, 25 mg vitamin B5, 25 mg vitamin B6, 800 mg folic acid. A dose may also include: 2g conjugated linoleic acid (CLA) 2 g.

An further exemplary anti-aging embodiment in accordance with the invention was formulated which is particularly useful for the hyperlipidemic aspects of aging is the following, with two doses per day recommended. Each dose contains: 2g pyruvate, 1 g aspartic acid, 250 mg HCA, 1 g ALC, 150 mg ALA, 750 mg TMG, 250 mg choline, 600 mg inositol, 100 mg coenzyme Q10, 750 mg guggulipid, 50 mg tocotrienols, 1 mg biotin, 1 mg folate, 50 mg pantothenic acid, and 50 mg pyridoxine. A dose may also include 1 g conjugated linoleic acid (CLA). By its activation of peroxisome proliferator associated receptors (PPAR), CLA further enhances beneficial effects upon hepatic fat oxidation and VLDL secretion.

An exemplary embodiment in accordance with the invention was formulated to inhibit the development of Type II diabetes, a prototypical disorder manifesting increased electron pressure and associated with aging. Two doses per day are recommended. Each dose includes: 300 mg coenzyme Q10, 300 mg alpha lipoic acid, 200 mg EPA, 100 mg chromium, 100 mcg selenium, 2g aspartate, 1 mg biotin, 500 mg creatine, 1.5 g L-arginine, 50 g pyridoxine, 1 mg folic acid, 100 mg thiamine, 500 mg carnitine, 500 mg TMG, 500 mg glycerylphosphorylcholine, and 500 mg phosphatidyl choline.

Inflammatory gastro-intestinal disease is also a prototypical aging phenomenon. An exemplary embodiment in accordance with the invention was formulated for particularly addressing this issue. Two doses per day are recommended. Each dose includes: 4g phosphatidyl choline, 2 g choline, 500 mg glycine, 2g glutamine, 100 mg R alpha lipoic acid, 200 mg niacin, 1 mg folate, 50 mg pyridoxal phosphate, 100 mg SAMe, 150 mg ALC, 2 g CLA, 2 g EPA, 50 g green tea leaf extract, 100 mcg vitamin B12, 2500 IU vitamin A, 400 IU vitamin D, and 200 IU vitamin E.

Hydroxyl ions have significant reducing potential, as shown by their detoxification via reaction with the oxidized disulfide groups in albumin. Hydroxyl ions are present in the inflammatory reaction seen in multiple sclerosis. They play a key role in myelin breakdown. When present in sufficient quantity, sphingomyelin binds the high-energy electrons supplied by the hydroxyl ions in a sacrificial act that neutralizes the hydroxyl radical. The sphingomyelin is consumed in the process, thereby degrading the structure and function of the myelin sheath. Thus, ingredients that quench hydroxyl ions, also control aging, e.g., through the tendency of hydroxyl ions to react with the positive nitrogen atom in the trimethylnitrogen moieties in the structures of the small electrophilic biomolecules. As this happens, methane is released. The anti-reductant agents thereby serve as sacrificial neutralizers of the hydroxyl ions (or other ROS). This inhibits or prevents the loss of sphingomyelin and preserves the integrity of the myelin sheath.

In Alzheimer's disease, decreases in the acetylcholine content of the brain are an early, and consistent, finding associated with disastrous functional consequences. Oxidative stress has been implicated early in the course of Alzheimer's disease, and hydroxyl ion activity has also been documented. Acetylcholine, like sphingomyelin, has a positively charged trimethylnitrogen group and in all likelihood sacrifices itself as a partial defense against deleterious compounds possessing unpaired electrons. This adversely affects the function of cholinergic (acetylcholine mediated) neurotransmission. This neurological system helps mediate memory function and cognitive processing. Therapy for Alzheimer's disease, in accordance with the invention, utilizes combinations of electron-accepting compounds. They function as substitute electron acceptors for the acetylcholine molecules. In so doing, the acetylcholine molecules are preserved for their primary functions in the brain.

Apoptosis is another common feature of neurodegenerative processes. It is a delayed form of cell death brought about by activation of an energy-requiring suicide program inherent in multicellular organisms. Various mechanistic explanations for this exist, but the exact pathways involved are not fully understood. Elevated NAD+ levels are involved in DNA repair. DNA damage (as seen in states of oxidative stress) is known to activate poly (ADP-ribose) polymerase (PARP), which utilizes NAD+ as a substrate. This results in NAD+ depletion, and subsequently ATP depletion, due to futile activation of energy-consuming NAD+ re-synthetic pathways. ATP depletion is known to be one of the central factors leading to the induction of apoptosis. Reductive stress, in the presence of oxygen, typically generates ROS, including hydroxyl radicals. This may activate apoptotic pathways.

Nerve growth factor (NGF) is one of the only known agents that prevents apoptosis of cells in culture. Currently, NGF must be administered by intracranial injection. This provides a significant impediment for broad clinical utility. In contrast, anti-aging agents which increase NAD+ (and thus decrease the NADH/NAD+ ratio), may be taken orally and have easy access to the central nervous system. Augmentation of NAD+ levels prevents DNA damage. In addition, NAD+ has been reported to inhibit calcium-magnesium endonuclease, which fragments DNA when it is activated during the apoptotic process. High NAD+ levels also facilitate DNA repair. The anti-reductant activity of individual ingredients discussed above increases NAD+ levels. Thus, a multifunctional anti-aging combination for augmenting NAD+ levels was formulated. Typically it is administered two to three times per day for an effective period of time. One dose includes: 500 mg niacinamide, 500 mg ALC, 250 mg inositol, 250 mg choline, 500 mg phosphatidyl choline, 50 mg glycine, 100 mg lipoic acid, 30 mg coenzyme Q10, 10 mg vitamin B1, 10 mg pyridoxine, 10 mg pantothenic acid, and 150 mg glycerylphosphorylcholine. EPA may also be included, preferably in the amount of 100 mg per dose. This formulation is heavily stacked with sacrificial electron-accepting agents, each of which are able to recycle NADH to NAD+. Their similar biochemical functions act synergistically in this regard. This fact, coupled with their quite different chemical structures, enables this composition to function effectively in the various intra-cellular compartments occupied by the various agents.

The invention includes any of the above supplements as an anti-aging supplement in combination with a food, beverage, condiment, spice or salad dressing.

### 16. Eye Health Enhancers

The invention contemplates the combination of an eye health enhancement supplement with a food, beverage, condiment, spice or salad dressing. The anti-aging agents discussed above tend to prevent vision deterioration, insofar as vision deterioration is generated by the aging mechanisms. In addition, vision deterioration is particularly associated with ARMD (Age Related Macular Degeneration). ARMD is know to be caused by debris buildup, such as debris caused by free electron action, which buildup leads to inflammation, which in turn prevents blood from getting to the RPE (Retinal Pigment Epithelial) cells. Vision deterioration is also known to be correlated to the loss of color in cells of the eye. Natural supplements that are known to counteract the above deterioration and enhance vision include lutein, zeaxanthin, beta-carotene, vitamin C, vitamin E and zinc. The invention contemplates the combination of any of these with a food, beverage, condiment, spice or salad dressing. The invention also contemplates the combination of pharmaceutical compounds that are known to prevent vision deterioration or to enhance vision with a food, beverage, condiment, spice or salad dressing. Such pharmaceuticals include isotretinoin-13-cis-rentinoic acid.

### 17. Joint Health Supplements

Degenerative joint disease is generally caused by the degeneration of cartilage within the joint. The joint health supplement according to the invention is designed to assist in the growth and/or maintenance of the cartilage and to reduce the inflammation that both results from the degeneration and leads to additional degeneration. The joint health supplement includes glucosamine, chondroitin, SAMe, and MSM (methylsulfonylmethane), alone or in combination. Glucosamine and chondroitin are incorporated into cartilage, and SAMe and MSM are anti-inflammatory. If the supplement is provided in two doses a day, each dose would contain the respective ingredients in the following amounts: SAMe in a range from 10 mg to 200 mg (100 mg - 200 mg preferred), glucosamine in a range from 10 mg - 2 g (200 - 1500 mg preferred), chondroitin in a range from 10 mg - 2 g (200 - 1500 mg preferred), and MSM in a range from 50 mg to 3 g (100 mg - 2000 mg preferred).

### 18. Enhanced Physical Performance Supplements

Physical performance is the sum of many factors, including cognitive function, reaction - particularly mental reaction - to stress, muscle strength, the ability of the muscles to recover quickly after exertion, and the ability of the metabolism to provide energy as needed. All of these functions have been the subject of numerous studies related to supplements, and using the knowledge gained from such studies, we have designed supplements to address each issue.

We have addressed nerve and brain function enhancement in Section 6 above, and the supplements discussed therein are applicable to the cognitive and mental aspects of enhancing physical performance. However, we provide a specific example here which particularly lends itself to the cognitive aspects of physical performance. The recommended daily dosage is as follows: 1,000 mg glycerylphosphorylcholine, 1,000 mg creatine, 500 mg ALC, 100 mg ALA, 800 mcg folic acid, 30 mg B2, 200 mg niacinamide, 100 mg B6, 5 mg B12, 25 mg thiamine, 50 mg. coenzyme Q10, 50 mg phosphatidyl choline, 500 mg choline, 100 mg TMG, and 150 mg pyruvate.

An exemplary embodiment in accordance with the invention was formulated as a brain performance enhancing supplement. This is preferably used during athletic competitions, such as golf matches, under stressful work conditions, around school exam times, or in other similar circumstances. One or two doses per day are recommended. An individual supplement dose includes: 25 g lipoic acid, 100 mg, phosphatidyl choline, 40 mg ALC, 2 g Mg-creatine chelate, 100 mg TMG, 100 mg choline, 50 mg glycine, 50 mcg huperzine A, 50 mcg chromium, 50 mcg selenium, 50 mg thiamin, 150 mg niacinamide, 30 mg pantothenic acid, 20 mg riboflavin, 20 mg pyridoxal phosphate, 5 mg vitamin B12, and 1 mg folic acid. The above formulation is designed to be added to any food, beverage, condiment, spice or salad dressing. A sports drink mix can be obtained by adding the following ingredients: 225 mg NaCl, 175 mg NaHCO₃, 75 mg K₂HPO₄, 175 mg KHCO₃, 150 mg MgSO₄, 100 mg Mg citrate-monohydrate, 10 mg glucose and natural flavorings. As stated above, this product is primarily, although not exclusively, designed for use to enhance brain function during stressful periods. At these times, cortisol levels are frequently elevated. Under these conditions, the ability of the brain to use glucose, its main fuel source, is impaired. This exacerbates situations of inadequate fuel supply, deficiencies in energy production, neurotransmission, excessive free radical production and membrane repair. In a comprehensive approach in accordance with the invention, each of these abnormalities is addressed. This leads to stacking the formulation with agents that address the primary problem. Since there are simultaneously quite broad requirements in many other areas of brain metabolism, the agents chosen have multiple beneficial functions that address these needs cogently. In addition, the selected agents preferably cross the blood-brain barrier easily.

Pyridoxal phosphate was included for its beneficial modulation of the stress state and elevated cortisol concentrations. Since energy generation was impaired, all the B vitamins were included for their secondary roles in energy generation, as well as for their primary roles in modulation of high-energy electron flux. Chelated magnesium creatine was included not only for its ability to augment methyl group availability, but also to improve cerebral energy generation directly. Magnesium is important for many steps in energy production. ALA is multifunctional in these circumstances. It helps with energy generation, redox status, inflammation, transition metal handling, and in a role as an anti-oxidant that easily crosses into the brain and has activity in the cytosol as well as in lipid domains. Huperzine A crosses easily into the brain and improves cholinergic neurotransmission. ALC provides acetyl groups, up-regulates CoA levels, and improves cerebral energy generation. Choline acts as a precursor for the neurotransmitter acetylcholine and membrane phospholipids. Lipoic acid increases intracellular glutathione levels. This facilitates cellular anti-oxidant function. As may be seen in this example, the complexity of the problem was evaluated and the composition of the formulation was developed in accordance with the invention to address the complex problem. Because glucose availability and metabolism are important in this situation, glucose was included as an ingredient in the sports drink formulation. A preferred beverage would include sugars or other ingredients having comparable energy value.

An exemplary embodiment emulation in accordance with the invention facilitates post-workout muscle recovery. During high-intensity muscular workouts, many events occur that stress the functional and anatomic properties of the musculo-skeletal system. Large volumes of muscular work being performed require the generation of large numbers of high-energy electrons to fuel the process. In addition, during high-intensity exercise, the rate of muscular work being performed frequently exceeds the ability of the blood supply to deliver oxygen. This creates a situation where high-energy electrons are being rapidly generated at a time when there is insufficient oxygen present to act as the terminal electron acceptor for the high flux of electrons passing down the electron transport chain. This creates a condition which induces reductive stress in the muscle cell. As oxygen again becomes available, the glut of high-energy electrons is transferred non-enzymatically to oxygen. This results in the creation of superoxide radicals and many other ROS. The deleterious effects of this process are greatly magnified in the presence of free iron. Under these circumstances of (relative) ischemia/reperfusion, free iron is generated upon the reduction of ferric to ferrous iron. Free iron then catalyzes the formation of many more ROS. The end result of these processes is the development of a destructive pro-inflammatory state in the muscle. This produces muscle damage, impaired performance, muscle soreness, predisposition to injury and a prolonged recovery period, the underlying cause of which is a mismatch between the generation and the safe metabolism of large numbers of high-energy electrons in the affected muscles. Since the forces which generate the reductive stress are of large magnitude, this exemplary enhanced physical performance formulation includes relatively high doses and large numbers of active agents in the composition. Green tea leaf extract was chosen to bind free iron, as well as for potent anti-oxidant activity. Choline and carnitine were chosen together because of the beneficial effect of choline upon carnitine levels. Choline also acts as a precursor for acetylcholine, the neurotransmitter at the musculo-skeletal junction. Phosphatidyl choline augments these same processes and in addition facilitates membrane function and repair mechanisms. ALA has additional benefits regarding energy generation, iron metabolism, and glucose metabolism. The B vitamins chosen are used in high doses. In addition to their metabolic-uncoupling activities, they play important secondary roles in energy generation, stress modulation, glucose metabolism, and in the many avenues of cross-talk necessary for synergistic interaction. Pyruvate also enhances the activity of the enzyme PDH, as does carnitine (indirectly via elevation of CoA levels), thus better coupling the production and consumption of hydrogen ions. This beneficially modulates adverse pH effects. Creatine was included because of its beneficial modulation of energy state and the enzyme AMPK. An individual post-exercise dose of this supplement formulation contains: 25 mg R alpha lipoic acid, 100 mcg chromium, 50 mg Green tea leaf extract, 100 mg ALC, 250 mg phosphatidyl choline, 25 mg L-carnitine, 100 mcg selenium, 100 mg choline, 500 mg inositol, 250 mg TMG, 250 mg pyruvate, 1 g creatine, 50 mg B1, 50 mg B2, 100 mg B3, 50 mg B6, 5 mg B12, 100 mcg vanadyl sulfate, 500 mg BCAA (branched chain amino acids), 375 mg glutamine, and 250 mg L-arginine. To make a sports energy drink, 331 mg NaCl, 252 mg NaHCO₃ 100 mg K2HPO₄, 100 mg KHCO₃, 180 mg MgSO₄, 1400 mg Mg citrate, 30 g glucose, 1 g whey protein and natural flavorings could be added.

An exemplary embodiment in accordance with the invention was formulated as a sports performance supplement. Similar considerations apply here as were involved in the example just above. Special considerations for a supplement that is to be consumed shortly before, or during, a sporting event address issues including rapidity of absorption, gastric emptying, and stomach fullness, and are heavily influenced by energy generation and transduction concerns, and electrolyte shifts. These considerations explain some of the differences between the two formulations. An individual supplement dose contains: 50 mg vitamin C, 50 mcg Chromium, 50 mcg Selenium, 60 mcg vanadyl sulfate, 150 mcg pyruvate, 25 mg carnitine, 75 mg choline, 300 mg inositol, 150 mg TMG 20 mg alpha lipoic acid, 200 mg phosphatidyl choline, 150 mg BCAA, 125 mg glutamine, 100 mg L-arginine, 10 mg thiamin, 25 mg ribose, 25 mg niacin, and 10 mg vitamin B6. To make a drink mix, 331 mg NaCl, 300 mg NaHCO₃, 150 mg K2HPO₄, 150 mg KHCO₃, 260 mg MgSO₄, 300 mg Mg citrate, and 30 g glucose can be added.

An exemplary embodiment in accordance with the invention was formulated as a muscle-building supplement. There are overlapping considerations involving this example and two examples just above. Here the focus is upon the building of muscle, not sports performance or muscle recovery after an exhaustive workout. While similar considerations regarding high intensity muscle work as were outlined in the post-workout muscle recovery are relevant, the additional emphasis is upon the building of muscle, rather than the inhibition of its breakdown and recovery as were discussed above.

Muscle building relates to anabolic and vascular considerations and related issues. These considerations explain the changes in the small electrophilic biomolecule agents, amounts and ratios. Anabolic effects suggested the increase in the amount of creatine, the addition of taurine, the increase in BCAA, and the larger amount of the anti-catabolic agent glutamine. The inclusion of higher amounts of selenium, chromium, ALA and vanadyl sulfate were included to bolster the anabolic effects of the formulation by the insulin sensitizing action of these agents. The larger arginine dose, in conjunction with the actions of the insulin sensitizers, maximizes the blood flow to the involved muscles. This acts as a vascular traffic director by preferentially directing the remainder of the ingredients to the desired muscles. The result of these changes maximizes the local tissue concentrations of the active agents. This serves to magnify the end result while minimizing systemic toxicity. One dose per day is recommended. A single supplement dose includes: 10 g creatine, 300 mg ALC, 300 mg carnitine, 300 mg choline, 400 mg sphingomyelin, 150 mcg chromium, 150 mcg selenium, 100 mg R alpha lipoic acid, 150 mcg vanadyl sulfate, 500 mg pyruvate, 50 mg vitamin B1, 50 mg vitamin B2, 100 mg niacinamide, 20 mg pyridoxine, 400 mcg folic acid, 2 g glutamine, 400 mg L-arginine, 250 mg taurine, 500 mg pyruvate, and 500 mg BCAA. To make a drink mix, 750 mg Mg citrate and natural fruit flavor, such as strawberry can be added.

### 19. Preservatives, Color Enhancers, Thickening Agents, Vitamins, Minerals, Etc.

Small amounts of additional ingredients 150 may be added as known in the food art. These are conventional and thus will not be discussed in detail. Typical preservatives include calcium disodium EDTA, sorbic acid, citric acid, potassium sorbate, sodium benzoate, though any preservative may be used that is approved for use in foods. Color enhancers include food coloring and beet juice, though any conventional coloring used in foods may be used. Thickening agents include xanthan gum, guar gum, and karaya gum, though any thickening agent used in foods may be included. Preferred vitamins include vitamin A, vitamin B, vitamin C, vitamin D, vitamin E, and folic acid, but any vitamin may be included. Minerals include phosphorus, magnesium, manganese, copper, zinc, iron, calcium, and potassium, though any mineral may be included. Other ingredients can include flavorings and sweeteners such as sugar, maltodextrin, and sucralose. The composition of the weight loss salad dressing according to the invention may also include inactive excipients, carriers, diluents, adjuvants, and lubricants. Non-limiting examples of inactive excipients, carriers, diluents, lubricants, and adjuvants which can be used in the composition of the present invention include: cellulose, substituted cellulose, calcium carbonate, dicalcium phosphate, starches, lactose, modified food starches, dextrose, calcium sulfate, magnesium carbonate, magnesium stearate, stearic acid, glycerin, polysorbates, lecithin, silicium dioxide, food glaze, talc, croscarmellose sodium, povidone, and gelatin. Additional inactive excipients, carriers, diluents, lubricants and adjuvants which may be used with the active-ingredient composition of this invention are disclosed in the Handbook of Food Additives (CRC Press). All of the ingredients in this paragraph can be present in any conventional amount.

As an example of additional ingredients, for the formulation of Table IX, other ingredients may include guar gum, maltodextrin, sucralose, citric acid, and flavorings.

### 20. Specific Supplements

In the studies and analyses discussed above six health supplement ingredients have proven to be particularly useful in combination with a food, beverage, condiment, spice or salad dressing.
A. Policosanol: Policosanol has very light, grainy-nutty flavor that blends with many foods, beverages, condiments, spices and salad dressings. It also mixes well with foods; beverages, condiments, spices and salad dressings. It also has many health benefits. Has been proven in many studies to lower LDL cholesterol and raise HDL cholesterol. Tests have been carried out incorporating policosanol into baked goods, ketchup, mustard, steak sauce, cocktail sauce, barbecue sauce, various salad dressings, beer and wine and it actually improved the flavor. In all cases the flavor was just a bit more robust. Similar results were obtained when combined with cheese, pasta, vegetables and meats. Thus, this supplement is an excellent choice to add as a supplement in foods, beverages, condiments, spices and salad dressings.
B. Aspartate: Aspartate has an acidic flavor and should blend well in any food, beverage, condiment, spice, or salad dressing in which an acidic taste is expected or is not offensive. It does not mix as easily as policosanol, as it takes a good deal more time to dissolve. However, it has been combined successfully with spaghetti sauce, chili, many salad dressings, pickles, vegetables, meats, beer and wine. In some cases, such as the spaghetti sauce, chili and salad dressings, a little added sugar tended to balance out the aspartate taste. Aspartate is a key ingredient in many of the supplements discussed above, particularly weight loss supplements. Thus, this supplement is an excellent choice to add as a supplement in any foods, beverages, condiments, spices and salad dressings in which an acidic taste is expected or is not offensive.
C. Lipoic Acid: Lipoic acid has an unusual taste, but one that is not unlike other spicy foods, such as peppers. At first it has no taste, then it turns spicy, similarly to the delayed reaction of some peppers. Unlike peppers however, the spiciness does not dwell long, and turns into a nutty after-taste. It dissolves well. It has been combined successfully with chili, barbecue sauce, salad dressing and beer and wine. In strong-tasting foods, condiments, spices and salad dressings, such as a dark beer, its taste tended to disappear. It is an ingredient in many of the supplements above, particularly brain, nerve, anti-aging and physical performance enhancement supplements, as it is a good free electron modulator. It also plays a key role in protection against liver damage. Thus, it is an excellent supplement to combine with foods with a sophisticated taste, particularly alcoholic beverages.
D. Huperzine: Huperzine requires only five to fifty micrograms to be effective. At these dosages it is not noticeable in most foods to even a discriminating palate. It is a key ingredient in brain, nerve, anti-aging, and physical performance supplements as it assists neurotransmitter function. It is thus an excellent supplement for almost any food, beverage, condiment, spice or salad dressing.
E. Medium Chain Triglycerides And Their Medium Chain Fatty Acid Analogs:
   Here, "medium chain" means a chain length containing six to fourteen carbon atoms. Medium chain triglycerides (MCTs) are beneficial for improving myocardial pump function, brain function, particularly related to Alzheimer's disease and other neuro-cognitive disorders, and, as described above, in facilitating weight loss. They are clear, essentially tasteless agents that are stable over a range of temperature, pressure and shelf life conditions. This makes MCT's particularly useful as nutritional additives.
F. Trimethylglycine: By itself it, trimethylglycine has no taste at first, then after a second had a burst of sweetness followed by a beery aftertaste. It dissolves well. It was tested in the form of anhydrous betaine, which went particularly well with Mexican foods and most condiments. It was particularly nice in pickles and salad dressings. In significant quantities, such as a gram or more, it hardly affected the taste of beer and wines, even light beers. It is a good free electron modulator, so is an effective brain and nerve health enhancement supplement, is and good anti-aging supplement, and has been shown to have beneficial effect in cardio-vascular health. This supplement is thus a good additive to many foods, beverages, condiments, spices and salad dressings.

### 21. Alcoholic Beverages

An important aspect of the invention is that each of the supplement ingredients mentioned in this disclosure may be combined with an alcoholic beverage to provide a health-enhanced alcoholic beverage. The alcoholic beverage can thus have health benefits related to any of the disclosed applications: weight loss, brain and nerve function enhancement, cholesterol blocking and cholesterol level improvement, liver enhancement, cardiac health, vascular health, anti-aging, health, prostrate health enhancement, joint health, fetus development (prenatal) and/or a postnatal breast milk enhancement, eye health, or physical performance.

The following supplements were tested in a light beer, (Coors Light^{™}), a heavier beer (Bridgeport India Pale Ale), a dry white wine and a dry red wine: policosanol, aspartate, lipoic acid, huperzine, TMG, L-aspartic acid, acetyl-L-carnitine, and L-carnitine. In addition, a multi-component weight-loss supplement as described in Table VIII above, with aspartate as the gluconeogenic substrate, and a multi-component brain and nerve enhancement supplement with all the ingredients as described in Table X, with the preferred range of amounts were tested in the same four beverages.

Policosanol had very light grainy-nutty flavor that hardly changed the taste of any of the alcoholic beverages. Where the taste was evident, it was subtle and to most tasters enhanced the flavor. The aspartate added an acidic taste that blended will with the wines, made the light beer taste like a Corona^{™} with a twist of lime, and had little effect in the darker beer. With 50 mg in three ounces of beer, the lipoic acid had no taste at first, then a spicy taste like a hot pepper, followed by a nutty after taste. The slight nutty after taste was palatable to pleasant in the light beer, and hardly noticeable the darker beer. Huperzine, in the small quantities in which it is recommended above for use as a supplement, had no noticeable taste. The trimethylglycine was tested at a concentration of 1500 milligrams per 12 ounces of the light beer. This was a significantly larger dosage that would usually be used in a supplement, and lesser amounts were used in the darker beer and the wines. By itself it had no taste at first then after as second had a burst of sweet-like flavor then a beery aftertaste. It hardly changed the taste of either of the beers of the wine. The L-aspartic acid had a tart taste very much like kiwi fruit. It did not dissolve well in the beverages, but the product available was very course. With proper processing to make a finer powder, it should dissolve much better. At a concentration of about 0.5 grams to 12 ounces of beverage, it added just a hint of tartness, which was pleasant in the beers and hardly noticeable in the wines. The acetyl-L-carnitine that was available had magnesium sterate in it as a preservative. By itself, the taste was like that of a citrus candy, though stronger. It was tested at a concentration of 40 to 50 milligrams in three ounces of beverage. It dissolved well but had a small amount of sediment. Because it was such a small amount and could not be dissolved even with a larger volume of liquid, the sediment was believed to have been the magnesium sterate. The taste in the alcoholic beverages was a little tart, but much less than a lime slice in a Corona Light^{™}. In the stronger beer and wines, the tartness was hardly noticeable. The results with the L-carnitine were essentially identical to the acetyl L-carnitine results.

The results with the multi-component formulation following table VIII was similar to aspartate, but lighter. To those used to a squeeze of lime in their Corona^{™} the result was very pleasant.

The results with the multi-component formulation according to Table X, were not satisfactory. The supplement did not dissolve well, though this could have been because there was considerable filler in the commercial product used. The quantity used was about 1.2 grams in three ounces of beverage. The B-vitamin taste came through, mixed with a little bitterness. There was a significant after-taste. When mixed with the alcoholic beverages, it resulted in a complex taste, that to about half of the tasters was not unpleasant, but would take getting used to.

A feature of the invention is that many of the above supplements, taste somewhat acidic, and thus blend well with salad dressings, soft drinks and other foods and beverages that include an acid. They taste surprisingly good on salads, soft drinks and alcoholic beverages. This good taste is important, as it will encourage the use of the food or beverage. The acidic nature of the supplements is not so strong as to overwhelm the natural taste of the food and beverage bases given above. However, for very sensitive tastes, in the preferred embodiment, the acidity of food and beverage bases 110 are adjusted when combined with some supplements 120. For example, the thermogenic supplement in Table V above contains 24 grams of aspartic acid, which is a little more than ¾ ounce, or 1.5 tablespoons of an acid. Thus, if the weight loss supplement of Table V is combined with a salad dressing base, optimally, the acidity of the base should be reduced by about 1.5 tablespoons. For example, if the weight loss supplement of Table V is combined with the Ranch salad dressing base of Table D, preferably, only 1.5 tbls of vinegar should be used instead of the 3 tbls indicated in the table. If it is combined with the Bleu Cheese salad dressing of Table E, which is already highly acidic, an adjustment might not be made; however, for discriminating tastes, the vinegar would be reduced by 1.5 tbls or the lactic acid eliminated altogether. Similarly, an adjustment might or might not be made for the other salad dressing bases. Similarly, the acidity of the salad dressing base may be adjusted for other acidic weight loss supplements, such as that of Table IX. As another example, if the weight loss supplement includes L-carnitine L-tartrate, some people may prefer that an adjustment of the salad dressing base be made. However, it has been found that this particular ingredient blends especially well with salad dressings.

The ingredients are mixed at 160. Any one or more of the food, beverages, condiments, spices or salad dressings above may be mixed with any one or more of the supplements above to arrive at the invention. The mixing is preferably done by adding dry ingredients to wet while stirring and then adding other ingredients while continuing to stir, though the order of mixing is not crucial, particularly when using present day mixing apparatus. As is known in the art, the amounts of the various ingredients can be varied.

Since foods, beverages, condiments, spices, and salad dressings are quite varied, it is possible that one or more of the supplements may have been accidentally included in a food without the intent of making a food/supplement combination useful for addressing weight loss, brain and nerve function enhancement, cholesterol blocking and cholesterol level improvement, liver enhancement, cardiac health, vascular health, anti-aging, health, prostrate health enhancement, joint health, fetus development (prenatal) and/or a postnatal breast milk enhancement, eye health or physical performance supplement. Thus, it is important to the invention that the ingredients described as supplements be present in the foods, beverages, condiments, spices and salad dressings in amounts greater than that present naturally in foods, and more particularly in amounts sufficient to effect enhanced health and bodily function in a human being.

The method of this invention also comprises a method of manufacturing the supplements of the invention in a manner that enables it to be easily combined with a food, beverage, condiment, spice, or salad dressing. Generally, this involves using a process that produces a fine-grained, easily dissolvable powder.

Preferably, the foods supplements of this invention are ingested on a daily basis for a period of at least three weeks, more preferably at least six weeks. The foods with supplements may also be used to maintain or enhance a function, and for this use may be taken each day, with the dosage reduced.

Embodiments in accordance with the invention have been described herein mainly with reference to human physiology and metabolism. Since the metabolism of many animals is very similar to that of humans, the invention is generally useful in animals, and widely applicable in mammalian physiology and veterinary medicine. Examples of useful applications include enhancement of athletic performance in greyhounds or racehorses, enhanced and prolonged fertility in breeding stock, and health maintenance in household pets. That is, each of the supplement applications mentioned above - weight loss supplement, brain and nerve function enhancement supplement, cholesterol blocker supplement and cholesterol level improvement supplement, liver enhancement supplement, cardiac supplement, vascular supplement, anti-aging supplement, bone supplement, prostrate health enhancement supplement, joint health supplement, fetus developmental (prenatal) and/or a postnatal breast milk enhancement supplement, eye health enhancement supplement, and physical performance supplement respectively - have application to mammals as well as humans.

In the above discussion, most ingredients given are natural occurring compositions, most of which the body has become accustomed to because they are present in minute amounts in natural foods and drinks. Few, if any have side effects. In particular, policosanol, aspartate, lipoic acid, huperzine, trimethylglycine, and the medium chain triglycerides all are natural compounds that have no known side effects.

It should further be understood that for many of the metabolic functions described above a significant number of ingredients are listed. In general, a suitable supplement for that metabolic function can be composed of any combination of the listed ingredients, and in some cases, just one of the ingredients. In some cases a preferred list of ingredients are given. It is contemplated that the addition or subtraction of ingredients to the preferred list will generally also provide a food, beverage, condiment, spice or salad dressing which will be useful for the metabolic function. In all cases where a particular amount of an ingredient is given, it is understood that the indicated amount is a preferred amount, and that variations from the indicated amount will also be effective. This is particularly true with regard to ingredients that are natural compounds with no known side effects, since doubling or tripling the amount of such a substance usually has no ill effect.

There has been described novel foods, beverages, condiments, spices and salad dressings as well as novel systems and methods for enhanced animal health. Now that the foods, beverages, condiments, spices, and salad dressings of the invention have been described, those skilled in the food, beverage, condiment, spice, salad dressing and supplement arts may make many variations. It should be understood that the particular embodiments shown in the drawings and described within this specification are for purposes of example and should not be construed to limit the invention, which will be described in the claims below. Further, it is evident that those skilled in the art may now make numerous uses and modifications of the specific embodiments described, without departing from the inventive concepts. It is also evident that the methods recited may, in many instances, be performed in a different order; or equivalent ingredients and processes may be substituted for the various ingredients and processes described.

## Claims

1. An alcoholic beverage designed to enhance liver function or prevent liver damage or disease in a human being or to enhance weight loss in a human being, said beverage comprising a beer, wine, or liquor base; said alcoholic beverage **characterized by** a composition (120) for enhancing liver function or preventing liver damage or disease in a human being or for enhancing weight loss in a human being, said composition comprising an ingredient selected from the group consisting of one or more gluconeogenic substrates, aspartate, aspartic acid, lipoic acid, alpha-lipoic acid, huperzine, medium chain triglycerides, pyruvate, L-aspartic acid, carnitine, acetyl-L-carnitine, L-carnitine, chromium, conjugated linoleic acid, chromium polynicotinate, garcinia cambogia, biotin, hydroxycitric acid (HCA), pyruvate, serine, glycine, phosphatidyl choline, lactate, glycerol, a gluconeogenic amino acid or an alphaketo analogue thereof, conjugated linoleic acid (CLA), eicosapentanoic acid (EPA), coenzyme Q10, magnesium, pyridoxine, gymnemic acid, gymnema sylvestre, mahuang or a derivative thereof; and guarana seed or a derivative thereof; said ingredient present in an amount in excess of the amount of said ingredient naturally present in said beer, wine, or liquor base.

2. An alcoholic beverage as in claim 1 wherein said composition comprises one or more of aspartate, lipoic acid, huperzine, L-aspartic acid, acetyl-L-carnitine, and L-carnitine.

3. An alcoholic beverage as in claim 1 wherein said composition comprises policosanol, aspartate, lipoic acid, huperzine, trimethylglycine (TMG), L-aspartic acid, acetyl-L-carnitine, and L-carnitine.

4. An alcoholic beverage as in claim 1 wherein said composition comprises a gluconeogenic substrate, hydroxy citrate (HCA), carnitine, biotin, chromium, conjugated linoleic acid (CLA), eicosapentanoic acid (EPA), coenzyme Q10, alpha lipoic acid, magnesium, pyridoxine, and gymnemic acid.

5. An alcoholic beverage ad in claim 1 wherein said gluconeogenic substrate is selected from the group consisting of: aspartate, lactate, glycerol; and a gluconeogenic amino acid or an alphaketo analogue thereof.

6. An alcoholic beverage as in claim 1 wherein said composition comprises L-carnitine, aspartic acid, garcinia cambogia, biotin, chromium polynicotinate, and pyruvate.

7. An alcoholic beverage as in claim 1 wherein said composition comprises: hydroxycitric acid; carnitine; biotin; and one or more gluconeogenic substrates selected from the group consisting of aspartate, lactate, glycerol, and a gluconeogenic amino acid or an alphaketo analogue thereof.

8. An alcoholic beverage as in claim 1 wherein said composition comprises L-carnitine and lipoic acid.
